(19) Europäisches Patentamt
European Patent Office
Office européen des brevets

(11) **EP 3 774 300 B1**

(12) **EUROPÄISCHE PATENTSCHRIFT**

(45) Veröffentlichungstag und Bekanntmachung des Hinweises auf die Patenterteilung:
**06.10.2021   Patentblatt 2021/40**

(21) Anmeldenummer: **18714755.8**

(22) Anmeldetag: **28.03.2018**

(51) Int Cl.:
**B29C 64/40** (2017.01)    **C08L 71/02** (2006.01)

(86) Internationale Anmeldenummer:
**PCT/EP2018/057933**

(87) Internationale Veröffentlichungsnummer:
**WO 2019/185135 (03.10.2019 Gazette 2019/40)**

(54) **GENERATIVES VERFAHREN ZUR HERSTELLUNG VON FORMKÖRPERN**

GENERATIVE METHOD FOR PRODUCING MOLDED BODIES

PROCÉDÉ DE FABRICATION ADDITIVE POUR LA FABRICATION DE CORPS FAÇONNÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.02.2021   Patentblatt 2021/07**

(73) Patentinhaber: **Wacker Chemie AG**
**81737 München (DE)**

(72) Erfinder: **GOTTSCHALK-GAUDIG, Torsten**
**84561 Mehring (DE)**

(74) Vertreter: **Bitterlich, Bianca et al**
**Wacker Chemie AG**
**Intellectual Property**
**Hanns-Seidel-Platz 4**
**81737 München (DE)**

(56) Entgegenhaltungen:
WO-A1-2018/036640      WO-A2-2017/009820
US-A1- 2016 114 533      US-A1- 2018 036 953

**EP 3 774 300 B1**

**Beschreibung**

Die Erfindung betrifft ein generatives Verfahren zur Herstellung von dreidimensionalen Formkörpern, welches dadurch gekennzeichnet ist, dass der Formkörper schrittweise aufgebaut wird, indem das strukturbildende Material in flüssiger Form ortsspezifisch ausgebracht wird, wobei zusätzlich ein zweites Material als Stützmaterial in Bereiche ausgebracht wird, die frei von dem strukturbildenden Material bleiben sollen, und nach der Verfestigung des strukturbildenden Materials entfernt wird. Durch Ausbringen des Stützmaterials über eine ortsfeste Ausbringeinheit auf eine in x-, y- und z-Richtung positionierbare Basisplatte können Formteile von erhöhter Qualität schnell, einfach und kostengünstig hergestellt werden.

**Stand der Technik**

Generative Fertigungsverfahren stehen für zahlreiche Materialien sowie deren Kombinationen zur Verfügung (z.B. Metalle, Kunststoffe, Keramiken, Gläser).

Für die Herstellung von Formkörpern durch die ortsspezifische Ausbringung eines flüssigen strukturbildenden Materials (sbM) stehen unterschiedliche Verarbeitungsverfahren zur Verfügung.

Im Fall hochviskoser oder pastöser sbM können diese in Form einer Raupe mittels einer Düse ausgebracht und ortsspezifisch abgelegt werden. Das Ausbringen durch die Düse kann beispielsweise durch Druck oder durch einen Extruder erfolgen. Ein typisches Beispiel für dieses Verarbeitungsverfahren ist der 3D-Filament-Druck. Ein weiteres bekanntes Verfahren beruht auf der ballistischen Dosierung kleiner Mengen an sbM in Form von Tröpfchen, die mittels Druckköpfen ortsspezifisch ausgebracht werden. Im Fall von niederviskosen, nicht oder kaum scherverdünnenden Tinten wird das Verfahren Inkjet-Printing genannt, bei höherviskosen, scherverdünnenden Materialen ist die Bezeichnung Jetting gebräuchlich.

Voraussetzung aller generativen Herstellverfahren ist die Darstellung der Geometrie sowie ggf. weiterer Eigenschaften (Farbe, Materialzusammensetzung) des gewünschten Formkörpers in Form eines digitalen 3D-Datensatzes, welcher als virtuelles Modell des Formkörpers verstanden werden kann (A. Gebhardt, Generative Fertigungsverfahren, Carl Hanser Verlag, München 2013). Diese Modellierung erfolgt vorzugsweise mittels diverser 3D-CAD-Konstruktionsverfahren (*computer-aided design*). Als Eingangsdaten für die Erstellung eines 3D CAD-Modells können auch 3D-Messdaten dienen, wie diese z.B. aus CT-Messungen (Computer Tomographie) oder MRT-Messungen (Magnet Resonanz Tomographie) resultieren. Der 3D CAD-Datensatz muss nachfolgend durch material-, verfahrens- und anlagenspezifische Daten ergänzt werden, was dadurch erfolgt, dass dieser über eine Schnittstelle (Interface) in einem geeigneten Format (wie z.B. STL-, CLI/SLC-, PLY-, VRML-, AMF-Format) an eine Additive Manufacturing Software übergeben wird. Diese Software erzeugt aus den geometrischen Informationen letztlich virtuelle Einzelschichten *(slicen),* wobei die optimale Orientierung des Bauteils im Bauraum, Stützstrukturen etc. Berücksichtigung erfahren. Der vollständige Datensatz erlaubt dann die direkte Ansteuerung der für die generative Fertigung eingesetzten Maschine (3D- Drucker).

Der Software-Ablauf ist wie folgt:

1. Konstruktion des Bauteils im CAD-Format
2. Export in das STL-Datenformat
3. Aufteilung des 3D-Modells in Schichten parallel zur Druckebene und Generierung des GCode
4. Übertragung des GCode an die Druckersteuerung

Allen generativen Herstellverfahren mit ortsspezifischer Ausbringung des sbM gemein ist die Notwendigkeit von Stützstrukturen in Bereichen von Hohlräumen, Hinter- und Unterschneidungen bzw. Überhängen, da die ortsspezifische Ausbringung der sbM bis zur Aushärtung des sbM immer einer unterstützenden Oberfläche bedarf. Entsprechende Stützmaterialen (SM) zur Erzeugung von Hilfsstrukturen sind bekannt.

US 2015/0028523 A1 beschreibt den Einsatz eines thermoplastischen Polymers auf Basis von Polyglycolsäure als SM für den Filamentdruck. Nachteilig ist hier, dass das thermoplastische SM auf hohe Temperaturen von 200 °C und höher erwärmt werden muss und zur Entfernung des SM beispielsweise mit wässriger alkalischer Lösung gearbeitet werden muss.

US 2013/0337277 A1 beschreibt den Einsatz strahlenvernetzender Blockcopolymere z. B. auf Basis acrylatisierter Polyethylenglycol-Polycaprolacton-Blockcopolymere als temporäre SM. Durch die Strahlungsvernetzung in Anwesenheit von Wasser entstehen Hydrogele, die durch enzymatische Zersetzung entfernt werden können. Es zeigte sich, dass die Bildung der chemischen Gele durch Vernetzung langsam und der enzymatische Abbau zeitaufwändig ist und eine geeignete Lagerung der eingesetzten Lipasen voraussetzt. Zudem weisen Hydrogele den inhärenten Nachteil auf, dass während des Aufbaus der Zielstruktur, Wasser verdunsten kann und es damit zu einem Schrumpfen der Hilfsstruktur kommen kann.

Dieses Problem tritt auch bei Hydrogelen auf der Basis von partikulären Gelbildnern wie Schichtsilikaten bzw. Kieselsäuren auf. So zeigten Versuche mit wässrigen Dispersionen von Bentoniten, dass sich hinreichend stabile Gele erzeugen lassen, die anfänglich geeignete Stützstrukturen liefern. Während des Druckprozesses, der unter Umständen einige Stunden dauern kann, kann es jedoch zu einem Formverlust in Folge der Verdunstung von Wasser kommen.

US 7368484 B2 beschreibt die Nutzung der Reverse Thermal Gelation zur Bildung von Hilfsstrukturen. Dabei wird die reversible Gelbildung von Copolymeren unter Temperaturerhöhung ausgenützt. Da die Festigkeit dieser Gele jedoch nicht hinreichend ist, wird zusätzlich noch eine partielle Strahlenvernetzung benötigt, was die spätere Entfernung der Hilfsstrukturen erschwert.

WO 2014/092205 A1 erwähnt die Nutzung von Polyethylenglycol, insbesondere PEG 2000, zur Bildung von Hilfsstrukturen. Dabei wird der niedrigere Schmelzpunkt des PEG 2000 im Vergleich zu dem thermoplastischem sbM ausgenützt. Als generatives Herstellverfahren wird hier das sogenannte "laminated object manufacturing" eingesetzt, bei dem ganze Schichten, d.h. Laminate, des sbM abgelegt werden. Es zeigte sich jedoch, dass die ausschließliche Nutzung eines PEGs wie z.B. PEG 2000 beim ortsspezifischen parallelen Ausbringen von Elastomeren und Stützmaterial beispielsweise in Form von Einzeltropfen, nachteilig ist. So weist die Stützmasse nach dem Abkühlen einen ausgeprägten Schrumpf auf, der die Formtreue des eigentlichen Bauteils nachteilig beeinflusst. Ferner hat die PEG-Schmelze eine geringe Formstabilität, so dass die Tropfen nach dem ortsspezifischen Ausbringen verlaufen und das Drucken feiner Strukturen damit nicht möglich ist.

WO 2017/020971 A1 offenbart ein generatives Verfahren zur Herstellung von dreidimensionalen Formkörpern, welches dadurch gekennzeichnet ist, dass die Ausbringung des Stützmaterials über eine Vorrichtung erfolgt, die mindestens eine Ausbringeinheit aufweist, die in x-, y- und z-Richtung positioniert werden kann. Nachteil dieses Verfahrens ist, dass im Fall positionierbarer Ausbringeinheiten bei deren Richtungsänderungen, zum Beispiel an Ecken, häufig ein Versatz der ortspezifisch auszubringenden Tropfen in Folge der Masseträgheit der Tropfen auftritt. Das bedeutet, dass der auszubringende Tropfen einen Impuls in die ursprüngliche Bewegungsrichtung der Dosierdüse erfährt, mit dem Effekt, dass der Tropfen nicht mit hinreichender Ortsgenauigkeit ausgebracht wird. Zudem kann das Gewicht dieser Verfahreinheit bei mehreren Düsen hoch werden, was die akkurate Steuerung der Düsen erschwert. Ferner ist die Versorgung der mobilen Düsen mit den zu druckenden Materialien konstruktiv aufwendig. WO-A-2018/036640 offenbart ein Verfahren zum additiven Aufbau von Formkörpern durch ortspezifische Ausbringung eines Strukturbildenden Materials.

Aufgabe der vorliegenden Erfindung war es daher, ein generatives (= additives) Verfahren zur Herstellung von 3-dimensionalen Formkörpern bereitzustellen, welches erlaubt Stützmaterial schnell und in einfacher und kostengünstiger Weise aufzubauen und Formteile mit erhöhter Druckqualität herzustellen.

Diese Aufgabe wird durch das erfindungsgemäße Verfahren gelöst.

**Das erfindungsgemäße Verfahren**

Beim erfindungsgemäßen Verfahren handelt es sich um ein Verfahren zum additiven Aufbau von Formkörpern (8) durch ortsspezifische Ausbringung eines strukturbildenden Materials sbM (6b), dadurch gekennzeichnet, dass gleichzeitig oder zeitlich versetzt mindestens ein Stützmaterial SM (6a) in Bereiche ausgebracht wird, die frei von sbM (6b) bleiben, wobei das Ausbringen des SM (6a) über eine Vorrichtung erfolgt, die mindestens eine ortsfeste Ausbringeinheit (1a) für das SM (6a) aufweist, die durch ortsspezifisches Ausbringen des SM (6a) auf eine in x-, y- und z-Richtung positionierbare Basisplatte (3), die Stützstruktur für den Formkörper (8) sukzessive aufbaut, wobei das SM (6a) eine Zusammensetzung ist, enthaltend

    (A) wenigstens einen Polyether,
    (B) mindestens ein partikuläres rheologisches Additiv, und
    (C) optional weitere Zusatzstoffe

und nach Abschluss des Aufbaus des Formkörpers (8), das SM (6a) aus dem Formkörper (8) entfernt wird.

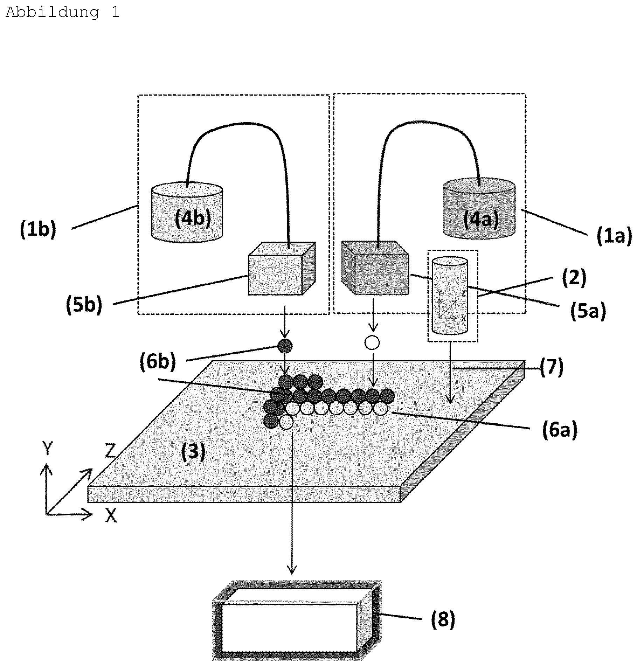

Abbildung 1 zeigt schematisch ein Beispiel wie eine erfindungsgemäße generative Fertigungsanlage aufgebaut sein kann, mit der das erfindungsgemäße Verfahren zur Herstellung von Siliconelastomerteilen (8) mit Hilfsstrukturen (6a) durchgeführt wird. Das SM (6a) befindet sich im Reservoir (4a) eines Einzeldosiersystems (1a), welches mit Druck beaufschlagt ist und über eine Dosierleitung mit einer Dosierdüse (5a) verbunden ist. Dem Reservoir (4a) können Einrichtungen vor- oder nachgeschaltet sein, die es ermöglichen, gelöste Gase durch Evakuieren zu entfernen. Über ein weiteres unabhängig voneinander arbeitendes Einzeldosiersystem (1b) wird das sbM (6b) ausgebracht. Das Einzeldosiersystem (1b) ist ebenfalls ausgestattet mit einem Reservoir (4b), welches über eine Dosierleitung mit einer Dosierdüse (5b) verbunden ist. Auch dem Reservoir (4b) können Einrichtungen vor- oder nachgeschaltet sein, die es ermöglichen, gelöste Gase durch Evakuieren zu entfernen.

Die Dosierdüse (5a) und ggf. auch die Dosierdüse(5b) sind ortsfest positioniert, um ein zielgenaues Abscheiden des SM (6a) bzw. des sbM (6b) auf einer beweglichen Basisplatte (3), die vorzugsweise beheizbar ist und in x-, y- und z-Richtung positioniert werden kann, bzw. im späteren Verlauf der Formteilentstehung auf das bereits platzierten SM (6a) bzw. bereits platzierten ggf. bereits vernetzten sbM (6b) zu ermöglichen.

Überraschender Vorteil einer positionierbaren Basisplatte (3) in Kombination mit ortfesten (d.h. fixierten) Dosierdüsen (5a) bzw. (5b) ist eine Verbesserung der Druckgenauigkeit und damit

einer erhöhten Druckqualität des zu druckenden Formteils. Im Fall positionierbarer Dosierdüsen tritt bei Richtungsänderungen der Dosierdüsen, zum Beispiel an Ecken, häufig ein Versatz der ortspezifisch auszubringenden Tropfen in Folge der Masseträgheit der Tropfen auf. Das bedeutet, dass der auszubringende Tropfen einen Impuls in die ursprüngliche Bewegungsrichtung der Dosierdüse erfährt, mit dem Effekt, dass der Tropfen nicht mit hinreichender Ortsgenauigkeit ausgebracht wird. Durch die erfindungsgemäße Positionierbarkeit der Basisplatte (3) in Kombination mit einer ortsfesten Dosierdüse (5a) bzw. (5b) wird dieser Nachteil vermieden. Die entsprechend gedruckten Formteile weisen somit ein schärferes Druckbild mit geringeren Fehlerstellen auf.

Ein weiterer Vorteil einer positionierbaren Basisplatte (3) in Kombination mit ortsfesten, fixierten Dosierdüsen (5a) bzw. (5b) ist eine Verringerung der zu bewegenden Masse. Im Fall positionierbarer (d.h. beweglicher) Dosierdüsen muss die Versorgung der Dosierdüsen mit dem auszubringenden SM (6a) bzw. sbM (6b) mittels vorzugsweise beheizbarer flexibler Zuleitungen von den Reservoiren (4a) und (4b) erfolgen. Optional können die Reservoire (4a) und (4b) mittels starrer Zuleitungen mit den Dosierdüsen (5a) und (5b) verbunden sein, was bedeutet, dass in diesem Fall die Reservoire (4a) und (4b) zusammen mit den Dosierdüsen (5a) und (5b) zur Positionierung bewegt werden müssen. In beiden Fällen muss eine beträchtliche Masse ortsgenau positioniert werden, was konstruktiv aufwändig und damit kostenintensiv ist, insbesondere unter Berücksichtigung der hohen Bewegungsgeschwindigkeiten von mindestens 0,1 m/s. Diese führen zu hohen Beschleunigungs- und Bremskräften, die einer genauen Positionierung der Düsen insbesondere bei Richtungswechsel wie im Fall von Ecken entgegenstehen. Es ist daher vorteilhaft, statt der Dosierdüsen erfindungsgemäß die Basisplatte (3) positionierbar auszugestalten und die Dosierdüsen zu fixieren.

Ein weiterer Vorteil einer positionierbaren Basisplatte (3) in Kombination mit fixierten Dosierdüsen (5a) bzw. (5b) ist die Möglichkeit eine größere Anzahl an Dosierdüsen einzusetzen, was bedeutet, dass auch eine größere Anzahl unterschiedlicher Materialien in einem Bauteil verarbeitet werden können, d.h. z.B. neben SM verschiedene sbM, wie beispielsweise Silicone unterschiedlicher Härte oder Farbe. Vorzugsweise können auch verschiedene SM, wie beispielsweise SM der weiter unten beschriebenen ersten und zweiten Ausführungsform und Silicone unterschiedlicher Härte oder Farbe zur Herstellung eines Bauteils verarbeitet werden. Im Fall positionierbarer Dosierdüsen führt der nur begrenzt zur Verfügung stehende Platz auf einer Verfahreinheit zu Einschränkungen bei der Anzahl montierbarer Dosierdüsen.

Ferner können eine oder mehrere Strahlungsquellen (2) zur Vernetzung des sbM (6b) vorhanden sein, die vorzugsweise ebenfalls in x-, y- und z-Richtung akkurat positioniert werden können, und mittels Strahlung (7) das sbM (6b) anvernetzen oder ganz vernetzen.

Bevorzugt werden zur Positionierung der Basisplatte (3) Verfahr-Einheiten mit hoher Wiederholgenauigkeit verwendet. Die zum Positionieren der Basisplatte (3) verwendete VerfahrEinheit hat eine Genauigkeit von mindestens $\pm$ 100 $\mu$m, vorzugsweise von mindestens $\pm$ 25 $\mu$m, jeweils in alle drei Raumrichtungen. Die maximale Geschwindigkeit der verwendeten Verfahr-Einheiten bestimmt maßgeblich die Herstellungszeit des Formteils (8) und sollte daher mindestens 0,1 m/s, vorzugsweise mindestens 0,3 m/s, besonders bevorzugt mindestens 0,4 m/s betragen.

Bevorzugt werden Dosierdüsen (5a) und (5b), die ein Jetting flüssiger Medien mittlerer bis hoher Viskosität ermöglichen. Als solche kommen insbesondere (thermische) Bubble-Jet- und Piezo-Druckköpfe in Frage, wobei Piezo-Druckköpfe besonders bevorzugt sind. Letztere ermöglichen das Jetting sowohl niedrigviskoser Materialien, wobei Tropfenvolumen von einigen wenigen Pikolitern (2 pL entsprechen einem Punktedurchmesser von ca. 0,035 $\mu$m) realisiert werden können, als auch mittel- und hochviskoser Materialien, wobei Piezo-Druckköpfe mit einem Düsendurchmesser zwischen 50 und 500 $\mu$m bevorzugt werden und Tropfenvolumen im Nanoliter-Bereich (1 bis 100 nL) erzeugt werden können.

Im Fall mittel- bis hochviskoser Materialien und insbesondere bei mittel- bis hochviskosen strukturviskosen Materialien wie den hier erfindungsgemäß eingesetzten SM (6a) bietet das beschriebene erfindungsgemäße Verfahren mit ortsfesten Ausbringeinheiten und verfahrbarer Basisplatte die o. g. Vorteile, da deren inhärent großen Tropfen eine besonders ausgeprägte Massenträgheit aufweisen und somit einen besonders großen Versatz bei Richtungsänderungen aufweisen können.

Mit niedrigviskosen Massen (< 100 mPas) können diese Druckköpfe Tröpfchen mit sehr hoher Dosierfrequenz abscheiden (ca. 1 - 30 kHz), während mit höherviskosen Massen (> 100 mPas) in Abhängigkeit von den rheologischen Eigenschaften (scherverdünnendes Verhalten) Dosierfrequenzen bis zu ca. 500 Hz erzielt werden können.

Die zeitliche Abfolge des Aufbaus von Hilfsstrukturen (6a) bzw. Zielstrukturen (6b) ist stark abhängig von der gewünschten Geometrie des Formteils (8). So kann es zielführender oder sogar zwingend nötig sein, zuerst zumindest Teile der Hilfsstrukturen (6a) aufzubauen und anschließend die eigentliche Zielstruktur (6b) zu erzeugen. Es kann aber auch möglich sein, beide Strukturen parallel, d. h. ohne zeitlichen Versatz zu erzeugen, d.h. mittels Paralleldosierung aus zwei unabhängigen Dosiereinrichtungen. Unter Umständen ist zuerst der Aufbau von zumindest Teilen der Zielstruktur (6b) sinnvoller und dann ein nachträglicher zumindest teilweiser Aufbau von Stützstrukturen (6a). Gegebenenfalls ist bei einem Bauteil mit komplexer Geometrie der Einsatz aller möglichen Varianten notwendig.

Im Fall des Ausbringens flüssiger, unvernetzter sbM (6b) wie beispielsweise Acrylharze oder Siliconkautschukmassen, müssen diese zur Bildung stabiler Zielstrukturen (8) vernetzt werden. Vorzugsweise erfolgt die Vernetzung des Tropfen für Tropfen deponierten sbM (6b) mittels einer oder mehrerer elektromagnetischer Strahlungsquellen (2) (z.B. IR-Laser, IR-Strahler, UV/VIS-Laser, UV-Lampe, LED), die vorzugsweise ebenfalls über eine Verfahrmöglichkeit in x-, y- und z-Richtung verfügen. Die Strahlungsquellen (2) können über Umlenkspiegel, Fokussiereinheiten, Strahlaufweitungssysteme, Scanner, Blenden etc. verfügen. Deponieren und Vernetzen müssen aufeinander abgestimmt werden. Das erfindungsgemäße Verfahren umfasst sämtliche diesbezüglich denkbare Möglichkeiten. Beispielsweise kann es notwendig sein, zunächst einen flächigen Bereich der x,y-Arbeitsebene mit Tropfen der sbM (6b) zu belegen und eine Nivellierung (Ineinanderfließen) abzuwarten, um erst dann diesen Bereich flächig zu bestrahlen und zu vernetzen. Ebenso kann es sinnvoll sein, die aufgebrachte Fläche zwecks Konturierung zunächst nur im Randbereich zu verfestigen und anschließend den Innenbereich durch geeignete Schraffuren anzuvernetzen. Es kann auch notwendig sein, einzelne Tropfen unmittelbar nach deren Platzierung zu vernetzen oder anzuvernetzen, um ein Verlaufen zu verhindern. Es kann zweckmäßig sein, den gesamten Arbeitsbereich während der Formteilbildung permanent zu bestrahlen, um vollständige Vernetzung zu erzielen, oder nur kurzzeitig der Strahlung auszusetzen, um gezielt eine unvollständige Vernetzung (Grünfestigkeit) herbeizuführen, was u.U. mit einer besseren Haftung der Einzelschichten untereinander einhergehen kann. Folglich wird es im Allgemeinen notwendig sein, die das Deponieren und Vernetzen bestimmenden Parameter in Abhängigkeit vom Vernetzungssystem, dem rheologischen Verhalten und den Haftungseigenschaften der sbM (6b) sowie ggf. der übrigen eingesetzten Materialien aufeinander abzustimmen.

Vorzugsweise werden als sbM (6b) flüssige Acrylate, Acrylat-Silicone-Copolymere bzw. deren physikalische Mischungen, acrylfunktionelle Silicone oder reine Siliconkautschukmassen verwendet. Bevorzugt ist die Verwendung von Acrylat-Silicone-Copolymeren bzw. deren physikalische Mischungen, acrylfunktionelle Siliconen oder reine Siliconkautschukmassen, besonders bevorzugt von acrylfunktionellen Siliconen oder reinen Siliconkautschukmassen und in einer speziellen Ausführung von Siliconkautschukmassen, insbesondere von strahlungsvernetzenden Siliconkautschukmassen.

Um eine Verschmutzung der Dosierdüsen zu vermeiden bzw. zu beseitigen, kann die in Abb. 1 gezeigte Anlage durch eine automatisch arbeitende Dosierdüsen-Reinigungseinheit ergänzt werden.

Die Einzeldosiersysteme können über eine Temperiereinheit verfügen, um das rheologische Verhalten der Materialien zu konditionieren und/oder die Viskositätserniedrigung durch erhöhte Temperaturen für das Jetting auszunutzen.

Vorzugsweise sind zumindest für die erfindungsgemäß eingesetzte SM (6a) das Einzeldosiersystem (1b), das Reservoir (4b) und ggf. die Dosierleitung mit Temperiereinheiten versehen. Gegebenenfalls kann das Einzeldosiersystem (1a) das SM (6a) auch in Form einer dünnen Raupe, d.h. nach dem Dispensing-Verfahren ausbringen. Insbesondere bei größeren, flächigen Strukturen hat dieses Verfahren Vorteile, z.B. im Hinblick auf die Druckgeschwindigkeit.

Das erfindungsgemäße Verfahren zur Erzeugung von Stützstrukturen (6a) kann mit allen bekannten Verfahren zum additiven Aufbau von Strukturen kombiniert werden, bei denen das sbM (6b) in flüssiger Form ortsspezifisch ausgebracht wird. Dazu zählen der Filamentdruck, das Dispensen, Inkjet-Verfahren und das Jetten.

Bevorzugt ist das Dispensen und Jetten von mittel- bis hochviskosen, scherverdünnenden flüssigen sbM (6b), besonders bevorzugt ist das Dispensen und Jetten von additionsvernetzenden Silicone-Elastomeren und in einer speziellen Ausführung das Jetten von UV-aktivierten oder strahlenvernetzenden Silicone-Elastomeren.

Die gesamte beispielhaft in Abbildung 1 skizzierte Anlage kann auch in einer Vakuumkammer oder Inertgaskammer untergebracht sein, z.B. um UV-C-Strahlungsverluste durch Sauerstoff auszuschließen oder Lufteinschlüsse im Formteil zu vermeiden.

Vorzugsweise kann der Druckraum der Anlage oder die gesamte Anlage in einer Kammer zum Ausschluss von Luftfeuchte untergebracht sein, wobei die Kammer entweder von außen mit Trockenluft gespült werden kann oder die Luft in der Kammer durch Umpumpen durch eine Trockeneinheit, wie beispielsweise eine Trocknungspatrone mit Molsieb oder eine Kondensationseinheit, getrocknet wird.

Das im erfindungsgemäßen Verfahren verwendete SM (6a) besteht aus folgenden Komponenten:

(A) wenigstens ein Polyether,
(B) mindestens ein partikuläres rheologisches Additiv, und
(C) optional weitere Zusatzstoffe

In einer ersten Ausführungsform ist das SM zusammengesetzt aus

50 Gew.-% - 99 Gew.-% A),
1 Gew.-% - 50 Gew.-% B) und

0 Gew.-% - 25 Gew.-% C),
bevorzugt ist das erfindungsgemäße SM zusammengesetzt aus 70 Gew.-% - 95 Gew.-% A),
5 Gew.-% - 30 Gew.-% B) und
0 Gew.-% - 10 Gew.-% C).

Das SM der ersten Ausführungsform weist vorzugsweise strukturviskose Eigenschaften auf, d.h. die Viskosität $\eta(\gamma)$ des SM ist abhängig von der Scherrate $\gamma$ und sinkt mit zunehmender Scherrate, wobei dieser Effekt reversibel ist und bei abnehmender Scherrate die Viskosität wieder zunimmt.

Insbesondere weist das SM der ersten Ausführungsform eine hohe Viskosität bei niedriger Scherrate auf. Vorzugsweise hat die Viskosität, gemessen bei einer Scherrate von 1 s$^{-1}$ bei 25 °C einen Wert größer 100 Pa·s, bevorzugt einen Wert zwischen 100 Pa·s und 10.000 Pa·s, besonders bevorzugt zwischen 100 Pa·s und 1.000 Pa·s.

Insbesondere weist das SM der ersten Ausführungsform vorzugsweise eine niedrige Viskosität bei hoher Scherrate auf. Vorzugsweise hat die Viskosität, gemessen bei einer Scherrate von 100 s$^{-1}$ bei 25 °C einen Wert kleiner 100 Pa·s, bevorzugt einen Wert zwischen 0,1 Pa·s und 50 Pa·s, besonders bevorzugt zwischen 1 Pa·s und 50 Pa·s.

Insbesondere weist das SM der ersten Ausführungsform thixotropes Verhalten auf, d. h. beispielsweise, dass der Anstieg der Scherviskosität nach Verringerung der Scherrate zeitabhängig ist. Das Verhalten lässt sich mittels eines Struktur-Relaxationsparameter R$^{90}$(1000;0,01) beschreiben. Dieser entspricht der Zeit, bis die Scherviskosität, nach Beenden einer Hochscherphase mit einer Scherrate von 1000 s$^{-1}$, 90% des Viskositätsmaximalwertes der nachfolgenden Ruhephase mit einer Scherrate von 0,01 s$^{-1}$ erreicht hat. R$^{90}$(1000;0,01) hat vorzugsweise einen Wert von 0,1 s bis 100 s, bevorzugt 0,5 s bis 75 s und besonders bevorzugt 1 s bis 50 s.

Vorzugsweise erfolgt der Wiederaufbau der Viskosität in Form einer konkaven Kurve, d. h. einer rechtsgekrümmten Kurve.

Vorzugsweise weist die konkave Viskositätsaufbaukurve eine kontinuierliche Abnahme der Steigung d$\eta$/dt auf. Dies bedeutet, dass die mittlere Steigung im ersten Drittel der Kurve $\overline{(d\eta/dt)_1}$ größer ist als die mittlere Steigung der Kurve im zweiten Drittel der Kurve $\overline{(d\eta/dt)_2}$ und die mittlere Steigung im zweiten Drittel der Kurve $\overline{(d\eta/dt)_2}$ größer ist als die mittlere Steigung der Kurve im dritten Drittel der Kurve $\overline{(d\eta/dt)_3}$, wobei das Gesamtzeitintervall der Kurve durch den Betrag des Struktur-Relaxationsparameter R$^{90}$(1000;0,1)gegeben ist.

Vorzugsweise ist der Quotient $\overline{(d\eta/dt)_1}$ / $\overline{(d\eta/dt)_3}$ größer als 1, besonders bevorzugt größer als 1,5 und in einer speziellen Ausführung größer als 2.

Das SM der ersten Ausführungsform ist ferner dadurch gekennzeichnet, dass es viskoelastisches Verhalten aufweist und insbesondere viskoelastische Festkörpereigenschaften im linear-viskoelastischen (LVE) Bereich aufweist. Dies bedeutet, dass im LVE-Bereich, definiert gemäß T. Mezger, G., The Rheology Handbook, 2. ed., Vincentz Network GmbH & Co. KG; Germany, 2006, 147ff., der Verlustfaktor tan$\delta$ = G''/G' einen Wert kleiner 1, bevorzugt kleiner 0,5 und besonders bevorzugt kleiner 0,25 hat.

Das SM der ersten Ausführungsform ist ferner dadurch gekennzeichnet, dass es sich um ein stabiles physikalisches Gel handelt. Dies bedeutet, dass der Plateau-Wert des Speichermoduls G' im LVE-Bereich bei 25 °C einen Wert größer 5x10$^3$ Pa und bevorzugt größer 1x10$^4$ Pa und besonders bevorzugt größer 2x10$^4$ Pa hat. Ferner ist das Gel dadurch charakterisiert, dass die kritische Fließspannung $\tau_{krit}$, das heißt, die Spannung $\tau$ bei der G' = G'' ist, einen Wert von größer 1 Pa, bevorzugt größer 5 Pa und besonders bevorzugt größer 25 Pa hat.

Vorzugsweise verhält sich das erfindungsgemäß eingesetzte SM thermo-rheologisch einfach in einem Temperaturbereich von 20 °C bis 200 °C, bevorzugt in einem Temperaturbereich von 25 °C bis 150 °C und besonders bevorzugt in einem Temperaturbereich von 25 °C bis 100 °C, mit der Maßgabe, dass der untere Wert des Temperaturbereichs mindestens 5 °C oberhalb des Erweichungsbereichs des eingesetzten Polyethers liegt. Dies bedeutet, dass das erfindungsgemäß eingesetzte SM in diesem Temperaturbereich keine Änderungen des Charakters der Struktur aufweist, z. B. keinen Übergang von einem viskoelastischen Festkörper zu einer viskoelastischen Flüssigkeit aufweist.

Dies bedeutet insbesondere, dass die Temperaturabhängigkeit der Scherviskosität mittels eines Arrhenius-Plots beschrieben werden kann, wobei auf der y-Achse der natürliche Logarithmus der Scherviskosität (ln $\eta$) und auf der x-Achse die reziproke absolute Temperatur (1/T [K$^{-1}$]) aufgetragen werden. Mittels linearer Regression lässt sich aus der Steigung die Aktivierungsenergie des Fließprozesses bestimmten. Vorzugsweise liegt die Aktivierungsenergie des Fließprozesses des erfindungsgemäß eingesetzten SM für eine Scherrate von 10 s$^{-1}$ im Bereich von 1 bis 100 kJ/mol, bevorzugt im Bereich von 5 bis 50 kJ/mol und besonders bevorzugt im Bereich von 10 bis 30 kJ/mol.

Vorzugsweise zeigt das SM der ersten Ausführungsform im technisch relevanten Temperaturbereich keine Änderung des Strukturcharakters, also z.B. keinen Übergang von einem viskoelastischen Festkörper zu einer viskoelastischen Flüssigkeit. Dies bedeutet insbesondere, dass der Wert des Verlustfaktors tan $\delta$ im Temperaturbereich von 20 °C bis 200 °C, bevorzugt im Temperaturbereich von 20 °C bis 150 °C und besonders bevorzugt Temperaturbereich von 20 °C bis 100 °C kleiner 1 ist. Dies bedeutet ferner, dass der Plateau-Wert des Speichermoduls G' im LVE-Bereich im Temperaturbereich von 20 °C bis 200 °C, bevorzugt im Temperaturbereich von 20 °C bis 150 °C und besonders bevorzugt im Temperaturbereich von 20 °C bis 100 °C einen Wert größer $5x10^2$ Pa, bevorzugt größer $1x10^3$ Pa und besonders bevorzugt größer $5x10^3$ Pa hat. Dies bedeutet ferner, dass die kritische Fließspannung $\tau_{krit}$, das heißt, die Spannung $\tau$ bei der G' = G" ist, im Temperaturbereich von 20 °C bis 200 °C, bevorzugt im Temperaturbereich von 20 °C bis 150 °C und besonders bevorzugt im Temperaturbereich von 20 °C bis 100 °C einen Wert von größer 1 Pa, bevorzugt größer 5 Pa und besonders bevorzugt größer 10 Pa hat.

Alle rheologischen Messungen werden im Beispielteil genauer ausgeführt.

In einer zweiten Ausführungsform umfasst das SM (6a) als Komponente (A) eine Polyetherzusammensetzung, umfassend (A1) mindestens einen ersten Polyether mit einem Festpunkt von unter 35 °C und (A2) mindestens einen zweiten Polyether mit einem Festpunkt von 35 °C oder darüber, wobei der Anteil des zweiten Polyethers (A2) bezogen auf das Gesamtgewicht der Polyetherzusammensetzung 5 Gew.-% oder mehr bis 70 Gew.-% oder weniger beträgt.

In der zweiten Ausführungsform ist das SM bevorzugt zusammengesetzt aus

65 Gew.-% - 99 Gew.-% (A),
1 Gew.-% - 10 Gew.-% (B) und
0 Gew.-% - 25 Gew.-% (C),
besonders bevorzugt aus
92 Gew.-% - 98 Gew.-% (A),
2 Gew.-% - 8 Gew.-% (B) und
0 Gew.-% - 10 Gew.-% (C),
insbesondere bevorzugt aus
84 Gew.-% - 96 Gew.-% (A),
4 Gew.-% - 6 Gew.-% (B) und
0 Gew.-% - 10 Gew.-% (C).

Der Einsatz eines zweiten Polyethers (A2) mit einem Festpunkt von 35 °C oder darüber in der Komponente (A) führt dazu, dass das SM der zweiten Ausführungsform eine relativ glatte Oberfläche aufweist. Zusätzlich führt der Einsatz des zweiten Polyethers (A2) dazu, dass das SM bei im abgekühlten Zustand (unter 60 °C) erstarrt und somit eine erhöhte Stabilität im Vergleich zu im Stand der Technik bekannten Gelen aufweist. Bei höheren Temperaturen (über 60 °C) verhilft das partikuläre rheologische Additiv dem SM zu ausreichender Viskoelastizität und Stabilität.

Das SM der zweiten Ausführungsform ist bevorzugt dadurch gekennzeichnet, dass es bei 70 °C strukturviskose und viskoelastische Eigenschaften aufweist. Strukturviskose Eigenschaften bedeuten, dass die Viskosität $\eta(\gamma)$ des SM (6a) von der Scherrate $\gamma$ abhängig ist und mit zunehmender Scherrate sinkt, wobei dieser Effekt reversibel ist und bei abnehmender Scherrate die Viskosität wieder zunimmt.

Vorzugsweise weist das SM der zweiten Ausführungsform bei 70 °C eine hohe Viskosität bei niedriger Scherrate auf. Vorzugsweise hat die Viskosität, gemessen bei einer Scherrate von 1 s$^{-1}$ bei 70 °C einen Wert von 10 Pa·s oder größer, bevorzugt einen Wert zwischen 15 Pa·s und 1.000 Pa·s, besonders bevorzugt zwischen 20 Pa·s und 500 Pa·s und in einer speziellen Ausführung zwischen 25 Pa·s und 250 Pa·s.

Das SM der zweiten Ausführungsform weist vorzugsweise bei 70 °C eine niedrige Viskosität bei hoher Scherrate auf. Die Viskosität, gemessen bei einer Scherrate von 100 s$^{-1}$ bei 70 °C hat einen Wert von 10 Pa·s oder kleiner, bevorzugt einen Wert von 0,1 Pa·s oder größer bis 10 Pa·s oder kleiner, besonders bevorzugt von 1 Pa·s oder größer bis 10 Pa·s oder weniger und in einer speziellen Ausführung von 1 Pa·s oder größer bis 7 Pa·s oder kleiner.

Vorzugsweise weist das SM der zweiten Ausführungsform bei 70 °C thixotropes Verhalten auf, d. h. beispielsweise, dass der Anstieg der Scherviskosität nach Verringerung der Scherrate von 500 s$^{-1}$ auf 1 s$^{-1}$ zeitabhängig ist. Vorzugsweise erfolgt der Wiederaufbau der Viskosität in Form einer konkaven Kurve, d. h. einer rechtsgekrümmten Kurve. Vorzugsweise ist der Wiederaufbau der Viskosität nach Verringerung der Scherrate von 500 s$^{-1}$ auf 1 s$^{-1}$ nach maximal 10 s abgeschlossen. Dies bedeutet, dass die Viskosität der Probe bei schlagartiger Verringerung der Scherrate von 500 s$^{-1}$ auf 1 s$^{-1}$ nach maximal 10 s einen stabilen Plateauwert erreicht hat.

Das SM der zweiten Ausführungsform ist ferner dadurch gekennzeichnet, dass es bei 70 °C viskoelastisches Verhalten aufweist und insbesondere bevorzugt viskoelastische Festkörpereigenschaften im linear-viskoelastischen (LVE) Bereich aufweist. Dies bedeutet, dass im LVE-Bereich, definiert gemäß T. Mezger, G., The Rheology Handbook, 2. ed., Vincentz Network GmbH & Co. KG; Germany, 2006, 147ff., der Verlustfaktor tan$\delta$ = G"/G' einen Wert kleiner 1, bevorzugt kleiner 0,75 und besonders bevorzugt kleiner 0,5 hat.

Das SM der zweiten Ausführungsform ist ferner dadurch gekennzeichnet, dass es sich bei 70 °C bevorzugt um ein stabiles physikalisches Gel handelt. Dies bedeutet, dass der Plateau-Wert des Speichermoduls G' im LVE-Bereich bei 70 °C einen Wert größer 100 Pa hat und bevorzugt im Bereich von 100 bis 5.000 Pa und besonders bevorzugt im Bereich von 100 bis 2.500 Pa liegt. Ferner ist das Gel dadurch charakterisiert, dass die kritische Fließspannung $\tau_{krit}$, das heißt, die Spannung $\tau$ bei der G' = G" ist, bevorzugt einen Wert von größer 1 Pa, bevorzugt größer 5 Pa und besonders bevorzugt größer 25 Pa hat. Das Speichermodul G' lässt sich über rheologische Messungen mithilfe eines Rheometers bestimmen.

Die SM der zweiten Ausführungsform weisen vorzugsweise im Temperaturbereich von 20 °C bis 60 °C einen Phasenübergang auf. D.h. die erfindungsgemäß eingesetzten SM (6a) weisen beim Abkühlen im Temperaturbereich von 20 °C bis 60 °C einen Übergang von einer Flüssigkeit mit viskoelastischem Verhalten zu einem Festkörper auf. Die diesem Phasenübergang zugeordnete Verfestigungstemperatur Ts wurde aus einem Temperatursweep-Experiment unter dynamischer Belastung der Probe mit konstanter Deformation und Frequenz unter Abkühlung im Temperaturbereich von 70 °C bis 20 °C erhalten. Dazu wurden die Messwerte des Betrags der komplexen Viskosität $|\eta^*|(T)$ mit Hilfe der Boltzmann-Sigmoidalfunktion analysiert. Die Verfestigungstemperatur Ts des SM (6a) liegt im Bereich von 20 °C oder mehr bis 60 °C oder weniger, bevorzugt im Bereich von 25 °C oder mehr bis 50 °C oder weniger. Vorzugsweise erfolgt die Verfestigung in einem engen Temperaturbereich, d.h. die Verfestigungskurve $|\eta^*|(T)$ ist steil. Dies bedeutet, dass der Steigungsparameter dT der Boltzmann-Sigmoidalfunktion einen Wert von 0,1 bis 1, bevorzugt 0,25 bis 0,75 aufweist.

Alle rheologischen Messungen werden im Beispielteil genauer ausgeführt.

Komponente (A)

Vorzugsweise werden in der oben beschriebenen ersten Ausführungsform als Polyether Polyalkylenglycole der allgemeinen Formel (I)

$$R'''-[(O-CH_2-CHR)_n(Z)_k(O-CH_2-CHR')_m]-OR'' \qquad (I)$$

eingesetzt, wobei

R           Wasserstoffatom oder C1 - C4-Kohlenwasserstoffrest, bevorzugt Wasserstoffatom oder Methylrest, und

R'          die gleiche Bedeutung wie R, wobei die Reste R und R' gleich oder verschieden sein können, und

R"          Wasserstoffatom, ggf. substituierter oder einfach oder mehrfach ungesättigter C1 - C20-Kohlenwasserstoffrest, Arylrest, Acylrest -(O)C-$R^x$ wie Formyl-, Acetyl-, Benzoyl-, Acryl-, Methacryl-, Vinylrest, Glycidoxyrest, Polyalkylenglycolrest wie Polyethylenglycolrest oder Polypropylenglycolrest mit 1 bis 50 Wiederholungseinheiten, und

R'''         die gleiche Bedeutung wie R", wobei die Reste R" und R''' gleich oder verschieden sein können, und

$R^x$        Wasserstoffatom, ggf. substituierter oder einfach oder mehrfach ungesättigter C1 - C20-Kohlenwasserstoffrest oder Arylrest, und

Z           ein Monomer mit mehr als 2 Hydroxylgruppen pro Molekül ist, d.h. eine Verzweigungsstelle, wie beispielsweise 3-wertige Alkohole wie Propantriol oder 4-wertige Alkohole wie 2,2-Bis-(Hydroxymethyl)-1,3-Propandiol, wobei die Hydroxygruppen in den Polyalkylenglycole mit den Alkenglycolmonomeren verethert werden und somit verzweigte Polyalkylenglycole resultieren mit vorzugsweise 3 oder 4 Seitenketten, und

k           0 oder 1 bedeutet, und

n, m        eine ganze Zahl von 0 bis 1000, bevorzugt 0 - 500 ist, mit der Maßgabe, dass die Summe n + m eine ganze Zahl von 1 bis 1000, bevorzugt von 5 - 500 ist.

Vorzugsweise sind die Polyalkylenglycole linear oder verzweigt, mit 3 oder 4 Seitenketten pro Molekül.

Bevorzugt sind Polyalkylenglycole mit einem Festpunkt kleiner 100°C, bevorzugt kleiner 50°C, besonders bevorzugt sind Polyalkylenglycole, die bei Raumtemperatur (= 25°C) flüssig sind.

Bevorzugt sind Polyethylenglycole mit einem zahlenmittleren Molekulargewicht (Mn) von 200 g/mol bis 10.000 g/mol. Bevorzugt sind Polypropylenglycole mit einem Mn von 200 g/mol bis 10.000 g/mol.

Besonders bevorzugt sind Polyethylenglycole mit einem Mn von ca. 200 g/mol (PEG 200), ca. 400 g/mol (PEG 400), ca. 600 g/mol (PEG 600), ca. 1000 g/mol (PEG 1000).

Besonders bevorzugt sind Polypropylenglycole mit einem Mn von ca. 425 g/mol, ca. 725 g/mol, ca. 1000 g/mol, ca. 2000 g/mol, ca. 2700 g/mol und 3500 g/mol.

Bevorzugt sind lineare Polyethylenglycol-Polypropylenglycol-Copolymerisate mit einem Mn von 200 g/mol bis 100.000 g/mol, besonders bevorzugt mit einem Mn von 1000 g/mol bis 50.000 g/mol, wobei es sich dabei um statistische oder BlockCopolymere handeln kann.

Bevorzugt sind verzweigte Polyethylenglycol-Polypropylenglycol-Copolymerisate mit einem Mn von 200 g/mol bis 100.000 g/mol, besonders bevorzugt mit einem Mn von 1000 g/mol bis 50.000 g/mol, wobei es sich dabei um statistische oder BlockCopolymere handeln kann.

Bevorzugt sind Polyalkylenglycolmonoether, d. h. Polyethylenglycolmonoether, Polypropylenglycolmonoether bzw. Ethylenglycol-Propylenglycol-Copolymer-Monoether mit einem Mn von 1000 g/mol bis 10.000 g/mol und einem Alkyletherrest, wie Methylether, Ethylether, Propylether, Butylether oder ähnliche.

Vorzugsweise können die Polyalkylenglycole rein oder in beliebigen Mischungen eingesetzt werden.

Die oben beschriebene zweite Ausführungsform umfasst als Komponente A vorzugsweise:

(A1) mindestens einen ersten Polyether mit einem Festpunkt von unter 35 °C, vorzugsweise 30 °C oder darunter, besonders bevorzugt 25 °C oder darunter, insbesondere 10 °C oder darunter und

(A2) mindestens einen zweiten Polyether mit einem Festpunkt von 35 °C oder darüber, vorzugsweise 40 °C oder darüber, besonders bevorzugt über 45 °C oder darüber, insbesondere 50 °C oder darüber, ganz besonders 55 °C oder darüber.

Bei den eingesetzten Polyethern handelt es sich üblicherweise um kommerzielle Produkte, die beispielsweise von der Fa. Clariant unter dem Handelsnamen Polyglykol vertrieben werden.

Verfestigen sich Polyether in einem bestimmten Temperaturbereich (Verfestigungsbereich), wird unter dem Festpunkt eines Polyethers die untere Grenze des Verfestigungsbereichs verstanden. Die Festpunkte bzw. Verfestigungsbereiche der Polyether können unabhängig davon beispielsweise mittels DSC gemäß DIN EN ISO 11357-3 ermittelt werden. Dabei wird der Festpunkt bzw. Verfestigungsbereich mittels Dynamischer Differenz Thermoanalyse (DSC) bestimmt: Gerät DSC 1 von Mettler-Toledo, Modul-Typ: DSC1/500 (Modulname: DSC1_1448)): Probeneinwaage: 8,5 mg, Temperaturbereich -70 °C bis 150 °C, Heiz-/Kühlrate 10 K/min; gemessen wurden zwei Durchläufe (ein Durchlauf besteht aus folgendem Heiz- und Kühlzyklus: von -70 °C (10 K/min) bis 150 °C und von 150 °C (10 K/min) bis -70 °C); für die Auswertung wurde der zweite Lauf verwendet.

Der Anteil des zweiten Polyethers (A2) bezogen auf das Gesamtgewicht der Polyetherzusammensetzung (A) beträgt 5 Gew.-% oder mehr bis 70 Gew.-% oder weniger, bevorzugt 10 Gew.-% oder mehr bis 65 Gew.-% oder weniger, ganz besonders bevorzugt 15 Gew.-% oder mehr bis 60 Gew.-% oder weniger.

Wird der Anteil des zweiten Polyethers (A2) zu gering gewählt, zeigt das SM im abgekühlten Zustand eine geringere Stabilität. Wird der Anteil des zweiten Polyethers(A2) zu hoch gewählt, tritt ein stärkerer Schrumpf bei Abkühlung des SM auf.

Der Anteil des ersten Polyethers (A1) bezogen auf das Gesamtgewicht der Polyetherzusammensetzung (A) beträgt vorzugsweise 30 Gew.-% oder mehr bis 95 Gew.-% oder weniger, bevorzugt 35 Gew.-% oder mehr bis 90 Gew.-% oder weniger, ganz besonders bevorzugt 40 Gew.-% oder mehr bis 85 Gew.-% oder weniger.

Vorzugsweise werden in der Polyetherzusammensetzung (A) für den ersten Polyether (A1) und den zweiten Polyether (A2) unabhängig voneinander Polyalkylenglycole der allgemeinen Formel (I)

$$R'''\text{-}[(O\text{-}CH_2\text{-}CHR)_n(Z)_k(O\text{-}CH_2\text{-}CHR')_m]\text{-}OR'' \qquad (I)$$

eingesetzt, wobei

R      Wasserstoffatom oder $C_1$-$C_4$-Kohlenwasserstoffrest, bevorzugt Wasserstoffatom oder Methylrest, und

R'      die gleiche Bedeutung wie R, wobei die Reste R und R' gleich oder verschieden sein können, und

R''      Wasserstoffatom, ggf. substituierter oder einfach oder mehrfach ungesättigter $C_1$-$C_{20}$-Kohlenwasserstoffrest, Arylrest, Acylrest -(O)C-$R^x$ wie Formyl-, Acetyl-, Benzoyl-, Acryl-, Methacryl-, Vinylrest, Glycidoxyrest, Polyalkylenglycolrest wie Polyethylenglycolrest oder Polypropylenglycolrest mit 1 bis 50 Wiederholungseinheiten, bevorzugt Wasserstoffatom oder Methylrest, besonders bevorzugt Wasserstoffatom, und

R'''      die gleiche Bedeutung wie R'', wobei die Reste R'' und R''' gleich oder verschieden sein können, und

$R^x$      Wasserstoffatom, ggf. substituierter oder einfach oder mehrfach ungesättigter $C_1$-$C_{20}$-Kohlenwasserstoffrest oder Arylrest, und

Z      ein Monomer mit mehr als 2 Hydroxylgruppen pro Molekül ist, d.h. eine Verzweigungsstelle, wie beispielsweise 3-wertige Alkohole wie Propantriol oder 4-wertige Alkohole wie 2,2-Bis-(Hydroxymethyl)-1,3-Propandiol, wobei die Hydroxygruppen in den Polyalkylenglycole mit den Alkenglycolmonomeren verethert werden und somit verzweigte Polyalkylenglycole resultieren mit vorzugsweise 3 oder 4 Seitenketten, und

k      0 oder 1 bedeutet, und

n, m      eine ganze Zahl von 0 oder mehr ist, mit der Maßgabe, dass n + m gleich 1 oder mehr ist.

Vorzugsweise sind die Polyalkylenglycole linear oder verzweigt, mit 3 oder 4 Seitenketten pro Molekül.

In einer weiteren Ausführungsform können in der Polyetherzusammensetzung (A) für den ersten Polyether (A1) und den zweiten Polyether (A2)unabhängig voneinander Monoether der oben definierten Polyalkylenglycole eingesetzt werden, vorzugsweise Polyethylenglycolmonoether, Polypropylenglycolmonoether oder Ethylenglycol-Propylenglycol-Copolymer-Monoether, vorzugsweise mit einem Alkyletherrest, besonders bevorzugt einen $C_1$-$C_{10}$-Alkyletherrest, wie Methylether, Ethylether, n-Propylether, n-Butylether oder ähnliche.

Der erste Polyether (A1) und der zweite Polyether (A2) werden vorzugsweise aus der Gruppe bestehend aus Polyethylenglycol, Polypropylenglycol, Polyethylenglycol-Polypropylenglycol-Copolymerisaten und deren Monoether ausgewählt.

Bei den Polyethylenglycol-Polypropylenglycol-Copolymerisaten handelt es sich vorzugsweise um statistische oder BlockCopolymere.

Besonders bevorzugt wird der erste Polyether (A1) aus der Gruppe bestehend aus

- einem Polyethylenglykol oder einem Monoether davon mit einer zahlenmittleren molaren Masse Mn von weniger als 1.000 g/mol, vorzugsweise 800 g/mol oder weniger, besonders bevorzugt 600 g/mol oder weniger, ganz besonders bevorzugt 400 g/mol oder weniger bis 200 g/mol oder mehr,
- einem Polypropylenglykol oder einem Monoether davon mit einer zahlenmittleren molaren Masse Mn von weniger als 2.000 g/mol, vorzugsweise 1.000 g/mol oder weniger, besonders bevorzugt 750 g/mol oder weniger, ganz besonders bevorzugt 600 g/mol oder weniger bis 400 g/mol oder mehr, und
- einem Polyethylenglycol-Polypropylenglycol-Copolymerisat oder einem Monoether davon mit einer zahlenmittleren molaren Masse Mn von weniger als 2.000 g/mol, vorzugsweise 1.000 g/mol oder weniger, besonders bevorzugt 600 g/mol oder weniger, bis 300 g/mol oder mehr,

ausgewählt.

In einer besonders bevorzugten Ausführungsform ist der erste Polyether (A1) ein Polyethylenglykol mit einer zahlenmittleren molaren Masse Mn von weniger als 1.000 g/mol, vorzugsweise 800 g/mol oder weniger, besonders bevorzugt 600 g/mol oder weniger, ganz besonders bevorzugt 400 g/mol oder weniger bis 200 g/mol oder mehr.

Beispiele für Komponente (A1) sind Polyethylenglycole mit einem Mn von ca. 200 g/mol (PEG 200), ca. 400 g/mol (PEG 400) oder ca. 600 g/mol (PEG 600) oder Polypropylenglycole mit einem Mn von ca. 425 g/mol oder ca. 725 g/mol.

Der zweite Polyether (A2) wird vorzugsweise aus der Gruppe bestehend aus

- einem Polyethylenglykol oder einem Monoether davon mit einer zahlenmittleren molaren Masse Mn 1.000 g/mol oder mehr, vorzugsweise 2.000 g/mol oder mehr, besonders bevorzugt 4.000 g/mol oder mehr, ganz besonders bevorzugt 8.000 g/mol oder mehr bis $10 \times 10^6$ g/mol oder weniger und
- einem Polyethylenglycol-Polypropylenglycol-Copolymerisat oder einem Monoether davon mit einer zahlenmittleren molaren Masse Mn von 2.000 g/mol oder mehr, vorzugsweise 4.000 g/mol oder mehr, besonders bevorzugt 8.000 g/mol oder mehr bis $10 \times 10^6$ g/mol oder weniger,

ausgewählt.

In einer besonders bevorzugten Ausführungsform ist der zweite Polyether (A2) ein Polyethylenglykol mit einer zahlenmittleren molaren Masse Mn von 1.000 g/mol oder mehr, vorzugsweise 2.000 g/mol oder mehr, besonders bevorzugt 4.000 g/mol oder mehr, ganz besonders bevorzugt 8.000 g/mol oder mehr bis $10 \times 10^6$ g/mol oder weniger.

Beispiele für Komponente (A2) sind Polyethylenglycole mit einem Mn von ca. 1.000 g/mol (PEG 1000), ca. 4.000 g/mol (PEG 4000), ca. 8.000 g/mol (PEG 8000), ca. 20.000 g/mol (PEG 20000).

Die zahlenmittlere molare Masse Mn kann durch Endgruppenanalyse mittels $^1$H-NMR-Spektroskopie oder nasschemisch durch Bestimmung des Hydroxylwertes ermittelt werden. Die Bestimmung des Hydroxylwertes kann dabei gemäß DIN 53240-2 durch Acetylierung der OH-Gruppen und anschließende Rücktritration der Acetylierungslösung mit KOH erfolgen. Die Acetylierungszeit sollte dabei mindestens 15 min betragen. Aus dem Messwert in mg KOH / g Polyether kann dann die zahlenmittlere molare Masse des Polyethers errechnet werden.

Bei hochmolekularen Polyethern mit sehr niedriger Endgruppendichte kann alternativ die zahlenmittlere molare Masse Mn bzw. die gewichtsmittlere molare Masse Mw mittels SEC (size exclusion chromatography) bestimmt werden.

Das gewichtsmittlere Molekulargewicht Mw und das zahlenmittlere Molekulargewicht Mn werden mittels Size Exclusion Chromatography (SEC)folgendermaßen bestimmt: gegen Polyethylenoxid-Standard 22000, in 100 mmol/1 Natriumnitrat mit 10 % Acetonitril, bei 40°C, Flow Rate 1,0 ml/min und Triple-Detektion (Kleinwinkellichtstreu-Detektor, Brechungsindex-Detektor und Viskosimetrie-Detektor z.B. von Malvern-Viscotek) auf einem Säulenset Ultrahydrogel 1000, 500, 250 von Waters Corp. USA mit einem Injektionsvolumen von 100 µl.

Komponente (B)

Als partikuläre Rheologieadditive werden in der vorliegenden Erfindung vorzugsweise feste, feinteilige anorganische Partikel eingesetzt.

Bevorzugt weisen die partikulären Rheologieadditive eine mittlere Partikelgröße < 1000 nm gemessen mittel Photonen-Korrelationsspektroskopie an geeignet verdünnten wässrigen Lösungen, insbesondere mit einer mittleren Primärteilchen-Partikelgröße von 5 bis 100 nm auf, bestimmt mittels optischer Bildauswertung an TEM-Aufnahmen. Dabei können diese Primärteilchen nicht isoliert existieren, sondern Bestandteile größerer Aggregate und Agglomerate sein.

Bevorzugt sind die partikulären Rheologieadditive anorganische Feststoffe, insbesondere Metalloxide, wobei Kieselsäuren besonders bevorzugt sind. Vorzugsweise weist das Metalloxid eine spezifische Oberfläche von 0,1 bis 1.000 m²/g (gemessen nach der BET Methode nach DIN 66131 und 66132) auf, besonders bevorzugt von 10 bis 500 m²/g.

Das Metalloxid kann Aggregate (Definition nach DIN 53206) im Bereich von Durchmessern von 100 bis 1.000 nm aufweisen, wobei das Metalloxid aus Aggregaten aufgebaute Agglomerate (Definition nach DIN 53206) aufweist, die in Abhängigkeit von der äußeren Scherbelastung (z.B. bedingt durch die Messbedingungen) Größen von 1 bis 1.000 µm aufweisen kann.

Das Metalloxid ist aus Gründen der technischen Handhabbarkeit vorzugsweise ein Oxid mit kovalentem Bindungsanteil in der Metall-Sauerstoff-Bindung, vorzugsweise ein Oxid im Aggregatszustand Feststoff der Haupt- und Nebengruppenelemente, wie der 3. Hauptgruppe, wie Bor-, Aluminium-, Gallium- oder Indiumoxid, oder der 4. Hauptgruppe wie Siliciumdioxid, Germaniumdioxid, oder Zinnoxid oder -dioxid, Bleioxid oder - dioxid, oder ein Oxid der 4. Nebengruppe, wie Titandioxid, Zirkonoxid, oder Hafniumoxid. Andere Beispiele sind stabile Nickel-, Cobalt-, Eisen-, Mangan-, Chrom- oder Vanadiumoxide.

Besonders bevorzugt sind Aluminium(III)-, Titan(IV)- und Silicium(IV)oxide, wie nasschemisch hergestellte, beispielsweise gefällte Kieselsäuren oder Kieselgele, oder in Prozessen bei erhöhter Temperatur hergestellte Aluminiumoxide, Titandioxide oder Siliciumdioxide, wie zum Beispiel pyrogen hergestellte Aluminiumoxide, Titandioxide oder Siliciumdioxide oder Kieselsäure.

Andere partikuläre Rheologieadditive sind Silikate, Aluminate oder Titanate, oder Aluminiumschichtsilikate, wie Bentonite, wie Montmorillonite, oder Smektite oder Hektorite.

Besonders bevorzugt ist pyrogene Kieselsäure, die in einer Flammenreaktion vorzugsweise aus Siliciumhalogenverbindungen oder Organosiliciumverbindungen, z.B. aus Siliciumtetrachlorid oder Methyldichlorsilan, oder Hydrogentrichlorsilan oder Hydrogenmethyldichlorsilan, oder anderen Methylchlorsilanen oder Alkylchlorsilanen, auch im Gemisch mit Kohlenwasserstoffen, oder beliebigen verflüchtigbaren oder versprühbaren Gemischen aus Organosiliciumverbindungen, wie genannt, und Kohlenwasserstoffen, z.B. in einer Wasserstoff-Sauerstoff-Flamme, oder auch einer Kohlenmonoxid-Sauerstoffflamme, hergestellt wird. Die Herstellung der Kieselsäure kann dabei wahlweise mit und ohne zusätzlichem Zusatz von Wasser erfolgen, zum Beispiel im Schritt der Reinigung; bevorzugt ist kein Zusatz von Wasser.

Vorzugsweise weisen die Metalloxide und insbesondere die Kieselsäuren eine fraktale Dimension der Oberfläche von vorzugsweise kleiner oder gleich 2,3 auf, besonders bevorzugt von kleiner oder gleich 2, 1, im Besonderen bevorzugt von 1,95 bis 2,05, wobei die fraktale Dimension der Oberfläche $D_s$ definiert ist als:

Partikel-Oberfläche A ist proportional zum Partikel-Radius R hoch $D_s$
Die fraktale Dimension der Oberfläche wurde bestimmt mittels Kleinwinkelröntgenbeugung (SAXS).

Vorzugsweise weisen die Metalloxide und insbesondere die Kieselsäuren eine fraktale Dimension der Masse $D_m$ von vorzugsweise kleiner oder gleich als 2,8, bevorzugt gleich oder größer 2,7, besonders bevorzugt von 2,4 bis 2,6 auf. Die fraktale Dimension der Masse $D_m$ ist hierbei definiert als: Partikel-Masse M ist proportional zum Partikel-Radius R hoch $D_m$. Die fraktale Dimension der Masse wurde bestimmt mittels Kleinwinkelröntgenbeugung (SAXS).

Vorzugsweise handelt es sich bei den partikulären Rheologieadditiven (B) um unpolare, d. h. oberflächenmodifizierte, insbesondere hydrophobierte, vorzugsweise silylierte feinteilige anorganische Partikel. Bevorzugt sind in diesem Zusammenhang hydrophobe Kieselsäuren, besonders bevorzugt hydrophobe pyrogene Kieselsäuren. Unter hydrophober Kieselsäure sind in diesem Zusammenhang unpolare Kieselsäuren gemeint, die oberflächlich modifiziert, vorzugsweise silyliert sind, wie sie beispielsweise in den Offenlegungsschriften EP 686676 B1, EP 1433749 A1 oder DE 102013226494 A1 beschrieben sind.

Für die erfindungsgemäß eingesetzten Kieselsäuren bedeutet dies, dass die Kieselsäureoberfläche hydrophobiert, d.h. silyliert ist.

Vorzugsweise sind die erfindungsgemäß eingesetzten hydrophoben Kieselsäuren modifiziert, d. h. silyliert mit Organosiliciumverbindungen, wie z.B.

(i) Organosilane bzw. Organosilazane der Formel (II)

$$R^1_d SiY_{4-d} \qquad (II)$$

und/oder deren Teilhydrolysate,
wobei

$R^1$ gleich oder verschieden sein kann und einen einwertigen, gegebenenfalls substituierten, gegebenenfalls einfach oder mehrfach ungesättigten, gegebenenfalls aromatischen Kohlenwasserstoffrest, mit 1 bis 24 Kohlenstoff-Atomen, der durch Sauerstoffatome unterbrochen sein kann, bedeutet,
d gleich 1, 2 oder 3 bedeutet und
Y gleich oder verschieden sein kann und Halogenatom, einwertige Si-N-gebundene Stickstoffreste, an den ein weiterer Silylrest gebunden sein kann, -OR$^2$ oder -OC(O)OR$^2$ bedeutet, wobei R$^2$ gleich Wasserstoffatom oder ein einwertiger, gegebenenfalls substituierter, gegebenenfalls einfach oder mehrfach ungesättigten Kohlenwasserstoffrest, der durch Sauerstoffatome unterbrochen sein kann, bedeutet,
oder

(ii) lineare, verzweigte oder cyclische Organosiloxane aus Einheiten der Formel (III)

$$R^3_e(OR^4)_f SiO_{(4-e-f)/2} \qquad (III),$$

wobei

R$^3$ gleich oder verschieden sein kann und eine der oben für R$^1$ angegebenen Bedeutungen hat,
R$^4$ gleich oder verschieden sein kann und eine für R$^3$ angegebene Bedeutung hat,
e 0, 1, 2 oder 3 ist,
f 0, 1, 2, 3 ist, mit der Maßgabe, dass die Summe e+f < 3 ist, und die Anzahl dieser Einheiten pro Molekül mindestens 2 ist, oder
Gemische aus (i) und (ii)

eingesetzt werden.

Bei den Organosiliciumverbindungen, die zur Silylierung der Kieselsäuren eingesetzt werden können, kann es sich beispielsweise um Gemische aus Silanen oder Silazanen der Formel (II) handeln, wobei solche aus Methyl-Chlorsilanen einerseits oder Alkoxysilanen und gegebenenfalls Disilazanen andererseits bevorzugt sind.

Beispiele für R$^1$ in Formel (II) sind vorzugsweise der Methyl-, Octyl-, Phenyl- und Vinylrest, besonders bevorzugt sind der Methylrest und der Phenylrest.

Beispiele für R$^2$ sind vorzugsweise der Methyl-, der Ethyl-, der Propyl und der Octylrest, wobei der Methyl- und der Ethylrest bevorzugt sind.

Bevorzugte Beispiele für Organosilane der Formel (II) sind Alkylchlorsilane, wie Methyltrichlorsilan, Dimethyldichlorsilan, Trimethylchlorsilan, Octylmethyldichlorsilan, Octyltrichlorsilan, Octadecylmethyldichlorsilan und Octadecyltrichlorsilan, Methylmethoxysilane, wie Methyltrimethoxysilan, Dimethyldimethoxysilan und Trimethylmethoxysilan, Methylethoxysilane, wie Methyltriethoxysilan, Dimethyldiethoxysilan und Trimethylethoxysilan, Methylacetoxysilane, wie Methyltriacethoxysilan, Dimethyldiacethoxysilan und Trimethylacethoxysilan, Phenylsilane, wie Phenyltrichlorsilan, Phenylmethyldichlorsilan, Phenyldimethylchlorsilan, Phenyltrimethoxysilan, Phenylmethyldimethoxysilan, Phenyldimethylmethoxysilan, Phenyltriethoxysilan, Phenylmethyldiethoxysilan und Phenyldimethylethoxysilan,Vinylsilane, wie Vinyltrichlorsilan, Vinylmethyldichlorsilan, Vinyldimethylchlorsilan, Vinyltrimethoxysilan, Vinylmethyldimethoxysilan, Vinyldimethylmethoxysilan, Vinyltriethoxysilan, Vinylmethyldiethoxysilan und Vinyldimethylethoxysilan, Disilazane wie Hexamethyldisilazan, Divinyltetramethyldisilazan und Bis(3,3-trifluorpropyl)tetramethyldisilazan, Cyclosilazane wie Octamethylcyclotetrasilazan, und Silanole wie Trimethylsilanol.

Besonders bevorzugt ist Methyltrichlorsilan, Dimethyldichlorsilan und Trimethylchlorsilan oder Hexamethyldisilazan.

Bevorzugte Beispiele für Organosiloxane der Formel (III) sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy-, Dimethylhydroxysiloxy-, Dimethylchlorsiloxy-, Methyldichlorsiloxy-, Dimethylmethoxysiloxy-, Methyldimethoxysiloxy-, Dimethylethoxysiloxy-, Methyldiethoxysiloxy-, Dimethylacethoxysiloxy-, Methyldiacethoxysiloxy- und Dimethylhydroxysiloxygruppen, insbesondere mit Trimethylsiloxy- oder Dimethylhydroxysiloxyendgruppen.

Bevorzugt haben die genannten Polydimethylsiloxane eine Viskosität bei 25°C von 2 bis 100 mPa·s.

Die erfindungsgemäß eingesetzten hydrophoben Kieselsäuren weisen eine Silanolgruppendichte von vorzugsweise kleiner 1,8 Silanolgruppen pro nm$^2$, bevorzugt von höchstens 1,0 Silanolgruppen pro nm$^2$ und besonders bevorzugt von höchstens 0,9 Silanolgruppen pro nm$^2$ auf.

Die Silanolgruppendichte wird mittels Säure-Base-Titration bestimmt.

Die Bestimmung des Rest-Silanolgehalts erfolgt analog G. W. Sears et al. Analytical Chemistry 1956, 28, 1981ff mittels Säure-Base-Titration der in einer 1:1-Mischung aus Wasser und Methanol suspendierten Kieselsäure. Die Titration erfolgt dabei im Bereich oberhalb des isoelektrischen Punktes und unterhalb des pH-Bereichs der Auflösung der Kieselsäure. Der Rest-Silanolgehalt in % kann demnach nach folgender Formel errechnet werden:

$$SiOH = SiOH(silyl)/SiOH(phil)\ 100\%$$

mit

SiOH(phil): Titrationsvolumen aus der Titration der unbehandelten Kieselsaure
SiOH(silyl): Titrationsvolumen aus der Titration der silylierten Kieselsaure

Die erfindungsgemäß eingesetzten hydrophoben Kieselsäuren weisen einen Kohlenstoffgehalt von vorzugsweise größer oder gleich 0,4 Gew.% Kohlenstoff, bevorzugt 0,5 Gew.% bis 15 Gew.% Kohlenstoff und besonders bevorzugt 0,75 Gew.% bis 10 Gew.% Kohlenstoff auf, wobei das Gewicht auf die hydrophobe Kieselsäure bezogen ist.

Der Kohlenstoffgehalt wird mittels Elementaranalyse bestimmt.

Die Elementaranalyse auf Kohlenstoff erfolgt nach DIN ISO 10694. Es kann ein CS-530 Elementaranalysators der Firma Eltra GmbH (D-41469 Neuss) verwendet werden.

Die erfindungsgemäß eingesetzten hydrophoben Kieselsäuren weisen eine Methanolzahl von vorzugsweise mindestens 30, bevorzugt von mindestens 40 und besonders bevorzugt von mindestens 50 auf.

Die Methanolzahl ist der prozentuale Anteil von Methanol, welcher der Wasserphase zugesetzt werden muss, um vollständige Benetzung der Kieselsäure zu erreichen. Vollständige Benetzung bedeutet dabei ein vollständiges Einsinken der Kieselsäure in der Wasser-Methanol-Testflüssigkeit zu erreichen.

Die Methanolzahl wird folgendermaßen ermittelt:

Benetzbarkeit mit Wasser-Methanol Gemischen (Volumen% MeOH in Wasser): Einschütteln eines gleichen Volumens der Kieselsäure mit gleichem Volumen an Wasser-Methanol Gemisch

- Start mit 0% Methanol
- bei Nicht-Benetzung schwimmt zumindest ein Teil der Kieselsäure auf: Es ist ein Gemisch mit um 5 Vol% höherem MeOH-Anteil zu verwenden
- bei Benetzung sinkt das gesamte Volumen der Kieselsäure ein: Anteil MeOH (Vol%) in Wasser gibt die Methanolzahl.

Die erfindungsgemäß eingesetzten hydrophoben Kieselsäuren weisen vorzugsweise eine DBP-Zahl (Dibutylphthalatzahl) von kleiner 250 g/100 g, bevorzugt 150 g/100g bis 250 g/100g auf.

Die Dibutylphthalatabsorption kann mit einem Gerät RHEOCORD 90 der Fa. Haake, Karlsruhe gemessen werden. Hierzu werden 12 g des Siliciumdioxidpulvers auf 0,001 g genau in eine Knetkammer eingefüllt, diese mit einem Deckel verschlossen und Dibutylphthalat über ein Loch im Deckel mit einer vorgegebenen Dosierrate von 0,0667 ml/s eindosiert. Der Kneter wird mit einer Motordrehzahl von 125 Umdrehungen pro Minute betrieben. Nach Erreichen des Drehmomentmaximums werden der Kneter und die DBP-Dosierung automatisch abgeschaltet. Aus der verbrauchten Menge DBP und der eingewogenen Menge der Partikel wird die DBP-Absorption berechnet nach: DBP-Zahl (g/100 g) = (Verbrauch DBP in g/Einwaage Pulver in g) x 100.

Die erfindungsgemäß eingesetzten hydrophoben Kieselsäuren weisen vorzugsweise eine Stampfdichte gemessen gemäß DIN EN ISO 787-11 von 20 g/l - 500 g/l, bevorzugt von 30 - 200 g/l auf.

Als partikuläres Rheologieadditiv (B) können beliebige Mischungen feinteiliger anorganischer Partikel eingesetzt werden, insbesondere können Gemische aus verschiedenen Kieselsäuren eingesetzt werden, so z.B. Mischungen aus Kieselsäuren unterschiedlicher BET-Oberfläche, oder Mischungen aus Kieselsäuren mit unterschiedlicher Silylierung oder Mischungen aus unmodifizierten und silylierten Kieselsäuren. Bevorzugt ist bei Mischungen aus silylierten, d. h. hydrophoben, unpolaren Kieselsäuren und unmodifizierten, d. h. hydrophilen, polaren Kieselsäuren, wobei der Anteil der hydrophoben Kieselsäuren an der Gesamtkieselsäuremenge mindestens 50 Gewichtsprozent (Gew.-%), bevorzugt mindestens 80 Gew.-% und besonders bevorzugt mindestens 90 Gew.-% beträgt. Die unmodifizierten, d. h. hydrophilen, polaren Kieselsäuren weisen vorzugsweise eine spezifische Oberfläche von 0,1 bis 1.000 $m^2$/g (gemessen nach der BET Methode nach DIN 66131 und 66132) auf, besonders bevorzugt von 10 bis 500 $m^2$/g.

Die unmodifizierten, d. h. hydrophilen, polaren Kieselsäuren weisen eine Silanolgruppendichte von vorzugsweise 1,8 Silanolgruppen pro $nm^2$ bis 2,5 Silanolgruppen pro $nm^2$, bevorzugt 1,8 Silanolgruppen pro $nm^2$ bis 2,0 Silanolgruppen pro $nm^2$ auf. Die unmodifizierten, d. h. hydrophilen, polaren Kieselsäuren weisen eine Methanolzahl von kleiner 30, bevorzugt kleiner 20, besonders bevorzugt kleiner 10 und in einer speziellen Ausführung werden die unmodifizierten, d. h. hydrophilen, polaren Kieselsäuren ohne Zusatz von Methanol vollständig von Wasser benetzt.

Die unmodifizierten, d. h. hydrophilen, polaren Kieselsäuren weisen eine Stampfdichte gemessen gemäß DIN EN ISO 787-11 von 20 g/l - 500 g/l, bevorzugt von 30 - 200 g/l auf und besonders bevorzugt von 30 - 150 g/l auf.

Die erfindungsgemäß eingesetzten unmodifizierten, d. h. hydrophilen, polaren Kieselsäuren weisen vorzugsweise eine DBP-Zahl (Dibutylphthalatzahl) von kleiner 300 g/100 g, bevorzugt 150 g/100 g bis 280 g/100g auf.

Weitere Zusatzstoffe (C)

Das erfindungsgemäße SM (6a) kann weitere funktionale Zusatzstoffe enthalten, wie beispielsweise

- Farbmittel, wie organische oder anorganische Farbpigmente oder molekular lösliche Farbstoffe;
- industriell übliche Lösungsmittel, wie Wasser, Aceton, Alkohole, aromatische oder aliphatische Kohlenwasserstoffe;
- Stabilisatoren, wie Hitze- oder UV-Stabilisatoren;
- UV-Tracer, wie Fluoreszenz-Farbstoffe, wie z.B. Rhodamine, Fluoresceine oder andere zum Nachweis von SM-Restspuren auf Bauteilen
- Polymere, wie polymere Rheologieadditive oder Verlaufshilfsmittel;
- Füllstoffe, wie nichtverstärkende Füllstoffe, wie zum Beispiel Füllstoffe mit einer BET-Oberfläche von bis zu 50 $m^2/g$, wie Quarz, Diatomenerde, Calciumsilikat, Zirkoniumsilikat, Zeolithe, Aluminiumoxid, Titanoxid, Eisenoxid, Zinkoxid, Bariumsulfat, Calciumcarbonat, Gips, Siliciumnitrid, Siliciumcarbid, Schichtsilikate, wie Glimmer, Montmorillionite, Bornitrid, Glas- und Kunststoffpulver
- Wasserfänger bzw. Trockenmittel, wie beispielsweise Molsiebe oder hydratisierbare Salze wie wasserfreies $Na_2SO_4$, mit einer mittleren Partikelgröße kleiner 500 $\mu$m, bevorzugt kleiner 100 $\mu$m, besonders bevorzugt kleiner als 50 $\mu$m, gemessen mittels Laserbeugung.

Das erfindungsgemäß eingesetzte SM (6a) ist ferner dadurch gekennzeichnet, dass Silicone auf der Oberfläche der SM (6a) spreiten können. Dies bedeutet, dass der Kontaktwinkel eines niedermolekularen Siliconöls (z.B. AK 100 der Wacker Chemie AG) einen Wert kleiner 90°, bevorzugt kleiner 60° und besonders bevorzugt das SM spontan ohne Ausbildung eines messbaren Kontaktwinkels benetzt.

Das erfindungsgemäß eingesetzte SM (6a) ist ferner dadurch gekennzeichnet, dass es sich bei kurzzeitiger Bestrahlung mit elektromagnetischer Strahlung, wie z. B. mit UV-Licht im Rahmen der Strahlungsvernetzung des sbM (6b), nicht verändert, d.h. keine Abbaureaktionen, Polymerisationen oder Verlust an Stabilität aufweist.

Das erfindungsgemäß eingesetzte SM (6a) ist vorzugsweise dadurch gekennzeichnet, dass es sich nach Aushärten des sbM (6b) leicht vom Formkörper (8) mechanisch oder durch Lösen in einem Lösungsmittel entfernen lässt. Dies kann mechanisch z.B. mittels Druckluft, Abschleudern z. B. mittels Zentrifuge, Bürsten, Schabern oder Ähnlichem erfolgen. Ferner kann das Entfernen durch Lösen in einem geeigneten Lösungsmittel erfolgen. Bevorzugt sind dabei umweltfreundliche und für den Endanwender unbedenkliche Lösungsmittel, vorzugsweise Wasser. Vorzugsweise weist das erfindungsgemäß eingesetzte SM (6a) und insbesondere die eingesetzten Polyether eine gute Löslichkeit in Wasser auf. Dies bedeutet, dass sich bei 20 °C mindestens 5 g SM in 100 g Wasser lösen, bevorzugt mindestens 50 g SM in 100 g Wasser lösen und besonders bevorzugt mindestens 100 g SM in 100 g Wasser lösen.

Dies bedeutet ferner, dass sich die eingesetzten Polyether zu mindestens 5 g in 100 g Wasser lösen, bevorzugt zu mindestens 50 g in 100 g Wasser lösen und besonders bevorzugt zu mindestens 100 g SM in 100 g Wasser lösen, jeweils bei 20 °C. Vorzugsweise wird das Lösungsmittel dazu erwärmt und/oder insbesondere dem Wasser geeignete Tenside wie anionische, kationische oder neutrale Tenside zugesetzt. Gegebenenfalls kann das Waschen maschinell erfolgen, beispielsweise in einer geeigneten Spülmaschine.

Vorzugsweise wird das erfindungsgemäß eingesetzte SM (6a) nach dem Entfernen vom Formkörper (8) recycelt. Dazu hat es sich als vorteilhaft erwiesen, wenn das erfindungsgemäß eingesetzte SM (6a) eine geringe Absorptionskapazität an flüchtigen Bestandteilen des sbM (6b) wie beispielsweise niedermolekulare Siloxane im Fall von Silicon-Elastomeren als sbM (6b) hat.

Bei der Herstellung der SM-Dispersionen, die partikuläre Rheologieadditive (B) enthalten, werden die partikulären Rheologieadditive (B) in die Polyetherzusammensetzung (A) eingemischt.

Die partikulären Rheologieadditive (B) können zur Herstellung der SM-Dispersionen bei Temperaturen oberhalb des Festpunktes der Komponente (A2) und bevorzugt oberhalb von 70 °C in die flüssige Polyetherzusammensetzung (A) zugegeben werden und durch Benetzung verteilt, oder durch Schütteln, wie mit einem Taumelmischer, oder einem High Speed Mixer, oder durch Rühren vermischt werden. Bei geringen Partikelkonzentrationen unter 10 Gew.% reicht im Allgemeinen einfaches Rühren zur Einarbeitung der Partikel (B) in die Flüssigkeit (A). Bevorzugt erfolgt das Einarbeiten und Dispergieren der Partikel (B) in die flüssige Polyetherzusammensetzung (A) bei sehr hohem Schergefälle. Hierfür sind vorzugsweise schnelllaufende Rührer, schnelllaufende Dissolver, z.B. mit Umlaufgeschwindigkeiten von 1-50 m/s, schnelllaufende Rotor-Stator Systeme, Sonolatoren, Scherspalte, Düsen, Kugelmühlen und andere geeignet.

Dies kann in diskontinuierlichen und in kontinuierlichen Verfahren erfolgen, bevorzugt sind kontinuierliche Verfahren. Im Besonderen geeignet sind Systeme, die zunächst mit effektiven Rührorganen die Benetzung und Einarbeitung der partikulären Rheologieadditive (B) in die Polyetherzusammensetzung (A) erzielen, z.B. in einem geschlossenen Behältnis oder Kessel, und in einem zweiten Schritt die partikulären Rheologieadditive (B) bei sehr hohem Schergefälle dispergieren. Dies kann durch ein Dispergiersystem in dem ersten Behältnis geschehen, oder durch Umpumpen in externe Rohrleitungen, die ein Dispergierorgan enthält aus dem Behältnis unter bevorzugt geschlossener Rückführung in das Behältnis. Durch eine teilweise Rückführung, und teilweise kontinuierliche Entnahme kann dieser Prozess bevorzugt kontinuierlich gestaltet werden.

Insbesondere geeignet ist zur Dispergierung der partikulären Rheologieadditive (B) in der SM-Dispersion der Einsatz von Ultraschall im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschallspitzen geschehen, oder in Durchflusssysteme, die, gegebenenfalls durch eine Rohrleitung oder Rohrwand abgetrennter Systeme, einen oder mehrere Ultraschallgeber enthalten. Ultraschalldispergierung kann kontinuierlich oder diskontinuierlich erfolgen.

Das Dispergieren kann in üblichen, zur Herstellung von Emulsionen bzw. Dispersionen geeigneten Mischgeräten, die einen ausreichend hohe Eintrag von Scherenergie leisten, wie beispielsweise schnelllaufende Stator-Rotor-Rührgeräte, wie z.B. nach Prof. P. Willems, bekannt unter dem registrierten Warenzeichen "Ultra-Turrax", oder anderen Stator-Rotor-Systemen, bekannt unter dem registrierten Warenzeichen wie Kady, Unimix, Koruma, Cavitron, Sonotron, Netzsch oder Ystral erfolgen. Andere Verfahren sind Ultraschallverfahren wie US Finger/Geber, oder US Durchflusszellen, oder US Systeme oder analog wie von Sonorex /Bandelin angeboten, oder Kugelmühlen, wie z.B. Dyno-Mill von WAB, CH. Weitere Verfahren sind schnelllaufende Rührer, wie Flügelrührer oder Balkenrührer, Dissolver wie Scheibendissolver z.B. der Firma Getzmann, oder Mischsysteme wie Planetendissolver, Balkendissolver oder andere kombinierte Aggregate aus Dissolver- und Rührersystemen. Andere geeignete Systeme sind Extruder oder Kneter.

Vorzugsweise erfolgt das Einarbeiten und Dispergieren der partikulären Rheologieadditive (B) unter Vakuum oder beinhaltet einen Evakuierungsschritt.

Vorzugsweise erfolgt das Einarbeiten und Dispergieren der partikulären Rheologieadditive (B) bei erhöhter Temperatur in einem Temperaturbereich von 30 °C bis 200 °C, bevorzugt 50 °C bis 150 °C und besonders bevorzugt 70 °C bis 100 °C. Vorzugsweise kann der Temperaturanstieg durch externes Heizen bzw. Kühlen gesteuert werden.

Selbstverständlich kann die SM-Dispersion auch auf andere Weise hergestellt werden.

Vorzugsweise werden die erfindungsgemäß eingesetzten SM (6a) in geeignete Dosierbehälter (4a) abgefüllt, wie Kartuschen, Schlauchbeutel oder ähnliche. Bevorzugt werden die Dosierbehälter (4a) anschließend durch Einschweißen z.B. in metallisierte Folie, vor Zutritt von Luftfeuchte geschützt.

Vorzugsweise werden die erfindungsgemäß eingesetzten SM (6a) vor und/oder während der Abfüllung entgast, beispielsweise durch Anlegen eines geeigneten Vakuums oder mittels Ultraschall.

Vorzugsweise werden die erfindungsgemäß eingesetzten SM (6a) vor der Abfüllung getrocknet, beispielsweise durch Anlegen eines geeigneten Vakuums bei erhöhter Temperatur. Der Gehalt an freiem Wasser im eingesetzten SM (6a), d. h. Wasser, das nicht an Wasserfänger oder Trockenmittel gebunden wurde, beträgt kleiner 10 Gew.-%, bevorzugt kleiner 5 Gew.-%, besonders bevorzugt kleiner 1 Gew.-% bezogen auf die Gesamtmasse des SM. Der Gehalt an freiem Wasser kann beispielsweise mittels Karl-Fischer-Titration oder NMR-Spektroskopie quantitativ bestimmt werden.

Vorzugsweise erfolgt Abfüllung der erfindungsgemäß eingesetzten SM (6a) bei erhöhter Temperatur in einem Temperaturbereich von 30 °C bis 200 °C, bevorzugt 50 °C bis 150 °C und besonders bevorzugt 70 °C bis 100 °C.

Vorzugsweise werden die erfindungsgemäß eingesetzten SM (6a) aus den Dosierbehältern durch mechanischen Druck bzw. mittels Luftdruck oder Vakuum ausgebracht.

Vorzugsweise erfolgt die Ausbringung der erfindungsgemäß eingesetzten SM (6a) aus den Dosierbehältern bei erhöhter Temperatur in einem Temperaturbereich von 30 °C bis 100 °C, bevorzugt 40 °C bis 100 °C und besonders bevorzugt 50 °C bis 100 °C.

**Beispiele**

Die folgenden Beispiele dienen der Erläuterung der vorliegenden Erfindung ohne diese zu beschränken.

**Analytische Methoden zur Charakterisierung der Kieselsäuren (Komponente B)**

<u>Methanolzahl</u>

Test der Benetzbarkeit mit Wasser-Methanol Gemischen (Volumen% MeOH in Wasser): Einschütteln eines gleichen Volumens der Kieselsäure mit gleichem Volumen an Wasser-Methanol Gemisch

-   Start mit 0% Methanol
-   bei Nicht-Benetzung schwimmt zumindest ein Teil der Kieselsäure auf: Es ist ein Gemisch mit um 5 Vol% höherem MeOH-Anteil zu verwenden
-   bei Benetzung sinkt das gesamte Volumen der Kieselsäure ein: Anteil MeOH (Vol%) in Wasser gibt die Methanolzahl.

Kohlenstoffgehalt (%C)

Die Elementaranalyse auf Kohlenstoff erfolgte nach DIN ISO 10694 unter Verwendung eines CS-530 Elementaranalysators der Firma Eltra GmbH (D-41469 Neuss).

Rest-Silanolgehalt

Die Bestimmung des Rest-Silanolgehalts erfolgte analog G. W. Sears et al. Analytical Chemistry 1956, 28, 1981ff mittels Säure-Base-Titration der in einer 1:1-Mischung aus Wasser und Methanol suspendierten Kieselsäure. Die Titration erfolgte im Bereich oberhalb des isoelektrischen Punktes und unterhalb des pH-Bereichs der Auflösung der Kieselsäure. Der Rest-Silanolgehalt in % kann demnach nach folgender Formel errechnet werden:

$$\mathrm{SiOH = SiOH(silyl)/SiOH(phil)\ 100\%}$$

mit

> SiOH(phil): Titrationsvolumen aus der Titration der unbehandelten Kieselsaure
> SiOH(silyl): Titrationsvolumen aus der Titration der silylierten Kieselsaure

DBP-Zahl

Die Dibutylphthalatabsorption wird gemessen mit einem Gerät RHEOCORD 90 der Fa. Haake, Karlsruhe. Hierzu werden 12 g des Siliciumdioxidpulvers auf 0,001 g genau in eine Knetkammer eingefüllt, diese mit einem Deckel verschlossen und Dibutylphthalat über ein Loch im Deckel mit einer vorgegebenen Dosierrate von 0,0667 ml/s eindosiert. Der Kneter wird mit einer Motordrehzahl von 125 Umdrehungen pro Minute betrieben. Nach Erreichen des Drehmomentmaximums werden der Kneter und die DBP-Dosierung automatisch abgeschaltet. Aus der verbrauchten Menge DBP und der eingewogenen Menge der Partikel wird die DBP-Absorption berechnet nach: DBP-Zahl (g/100 g) = (Verbrauch DBP in g/Einwaage Pulver in g) x 100.

Rheologische Messungen

Alle Messungen wurden auf einem Rheometer MCR 302 mit Luftlagerung der Firma Anton Paar bei 25 °C, sofern nicht anders genannt, durchgeführt. Es wurde mit Platte-Platte-Geometrie (25 mmm) bei einer Spaltweite von 300 $\mu$m gemessen. Überschüssiges Probenmaterial wurde nach Anfahren des Messspaltes mittels Holzspatel entfernt (sogenanntes trimmen). Vor dem Start des eigentlichen Messprofils wurde die Probe einer definierten Vorscherung unterworfen um die rheologische Historie aus Probenauftrag und Anfahren der Messposition zu beseitigen. Die Vorscherung umfasste eine Scherphase von 60 s bei Scherrate von 100 s$^{-1}$ gefolgt von einer Ruhephase von 300 s. Die Scherviskositäten wurden aus einem sogenannten Stufenprofil ermittelt, bei dem die Probe jeweils für 120 s bei einer konstanten Scherrate von 1 s$^{-1}$, 10 s$^{-1}$ und 100 s$^{-1}$ geschert wurde. Die Messpunktdauer betrug dabei 12 s (1 s$^{-1}$) bzw. 10 s (10 s$^{-1}$, 100 s$^{-1}$) und als Scherviskosität wurde der Mittelwert der letzten 4 Datenpunkte eines Blocks herangezogen. Der Struktur-Relaxationsparameter R$^{90}$(1000;0,01) bzw. der Quotient $\overline{(d\eta/dt)_1}/\overline{(d\eta/dt)_3}$ wurden aus einem Scherraten-Sprungversuch ermittelt. Dabei wird die Probe zuerst für 60 s bei einer Scherrate von 0,01 s$^{-1}$ (Messpunktdauer 10 s), dann für 0,5 s bei einer Scherrate von 1000 s$^{-1}$ (Messpunktdauer 0,05 s) und anschließend für 240 s bei 0,01 s$^{-1}$ (Messpunktdauer 1 s) geschert.

Der Plateauwert des Speichermodul G' der Verlustfaktor tan $\delta$ und die kritische Schubspannung $\tau_{krit}$ wurden aus einem dynamischen Deformationsversuch erhalten, bei dem die Probe bei einer konstanten Kreisfrequenz von 10 rad/s mit zunehmender Deformationsamplitude unter Deformationsvorgabe im Deformationsbereich von 0,01 bis 100 belastet wurde. Messpunktdauer war 30 s mit 4 Messpunkten pro Dekade. Der Plateau-Wert des Speichermoduls G' ist dabei der Mittelwert der Datenpunkte 2 bis 7 mit der Maßgabe, dass diese im linear-viskoelastischen Bereich liegen, d.h. keine Abhängigkeit von der Deformation bzw. Schubspannung aufweisen. Als Wert für den Verlustfaktor tan $\delta$ wurde der Wert beim 4. Messpunkt gewählt. Die Verfestigungstemperatur Ts der SM wurde mittels Temperatursweep unter dynamischer Scherbelastung ermittelt. Dabei wurde die Probe schrittweise mit einer Abkühlrate von 1,5 K/min von 70 °C auf 20 °C abgekühlt. Dabei wurde die Probe mit einer konstanten Deformation von 0,1% bei einer konstanten Frequenz von 10 Hz belastet. Die Messpunktdauer betrug 0,067 min. Man erhält den Speichermodul G'(T), den Verlustmodul G"(T), bzw. die komplexe Viskosität |$\eta$*|(T), jeweils als Funktion der Temperatur T. Eine Auftragung |$\eta$*|(T) gegen T ergibt eine sigmaoide Kurve. Mit Hilfe der Boltzmann Sigmoidalfunktion wurde aus der Kurve die Verfestigungstemperatur $T_s$ und die Steilheit der Kurve wie folgt ermittelt: Die Boltzmann Sigmoidalfunktion hat hier die Form

$$|\eta|^*(T) = \frac{|\eta|^*_{max} - |\eta|^*_{min}}{1 + e^{(T-T_0)/dT}} - |\eta|^*_{min} \, .$$

$|\eta|^*(T)$ ist dabei der Betrag der komplexen Viskosität als Funktion der Temperatur, $|\eta|^*_{max}$ der Plateauwert des Betrags der komplexen Viskosität bei niedriger Temperatur, $|\eta|^*_{min}$ der Plateauwert des Betrags der komplexen Viskosität bei hoher Temperatur, T ist die Temperatur in °C, $T_0$ ist der Wendepunkt und wird hier als Verfestigungstemperatur Ts in °C definiert und dT ist der Steigungsparameter, der die Steilheit der Kurve beschreibt. Die Funktion wurde dabei mit Hilfe der Software ORIGIN 2016G an die Messwerte angefittet. Als Iterationsalgorithmus wurde der softwareseitig implementierte Levenberg Marquardt-Algorithmus eingesetzt. Der Fit-Prozess wurde automatisch beendet, sobald der Fit konvergierte und der Chi-Quadrat-Wert von 1x10$^{-9}$ erreicht wurde. Die Plateauwerte $|\eta|^*_{max}$ und $|\eta|^*_{min}$ wurden aus den Messwerten durch Mittelung der ersten 10 bzw. letzten 10 Messpunkte ermittelt und im Rahmen der Kurvenanpassung fixiert. Die Parameter $T_0$ und dT wurden für die Iteration freigegeben.

**3D-Drucker (nicht erfindungsgemäß):** Für die nachfolgend beschriebenen Beispiele des nicht erfindungsgemäßen Verfahrens wurde als generative Fertigungsanlage ein "NEO-3D-Drucker" der Firma "German RepRap GmbH" verwendet, welcher für die Versuche umgebaut und angepasst wurde. Die ursprünglich im "NEO-3D-Drucker" montierte Thermoplast-Filament-Dosiereinheit wurde durch eine Jetting-Düse der Firma "Vermes Microdispensing GmbH, Otterfing" ersetzt, um höherviskose bis standfest-pastöse Massen wie die erfindungsgemäß eingesetzten SM tröpfchenweise abscheiden zu können.

Weil der "NEO"-Drucker für die Installation von Jetting-Düsen nicht standardmäßig ausgerüstet war, wurde er modifiziert. Die Vermes-Jetting-Düse wurde so in die Drucker-Steuerung eingebunden, dass das Start-Stopp-Signal (Triggersignal) der Vermes-Jetting-Düse von der GCode-Steuerung des Druckers betätigt wurde. Dazu wurde in der GCode-Steuerung ein spezielles Signal hinterlegt. Die GCode-Steuerung des Computers schaltete damit lediglich die Jetting-Düse ein und aus (Start- und Stopp der Dosierung).

Für die Signalübertragung des Start-Stopp-Signals wurde das Heizkabel der ursprünglich installierten Filament-Heizdüse des "NEO"-Druckers getrennt und mit der Vermes-Düse verbunden.

Die übrigen Dosierparameter (Dosier-Frequenz, Rising, Falling usw.) der Vermes-Jetting-Düse wurden mittels der MDC 3200+ Microdispensing Control Unit eingestellt.

Die Steuerung des 3D-Druckers erfolgte mittels eines Computers. Die Software-Steuerung und Steuersignal-Anbindung des 3D-Druckers (Software: "Repitier-Host") wurde dahingehend modifiziert, dass damit sowohl die Bewegung der Dosierdüse in den drei Raumrichtungen gesteuert werden konnte als auch das Signal zur Tropfenabscheidung. Die Verfahrgeschwindigkeit des "NEO" 3D Druckers beträgt 0,3 m/s und wird konstant gehalten. D.h. die Dosiereinheit wird auch während der Tropfenabscheidung nicht angehalten. Der Abstand von abgeschiedenen Tropfen wird mittels der Einstellgröße "Delay" geregelt und beträgt bei allen Versuchen 98 ms.

**3D-Drucker (erfindungsgemäß):** Für die nachfolgend beschriebenen Beispiele des erfindungsgemäßen Verfahrens wurde als generative Fertigungsanlage ein folgendermaßen konstruierter 3D-Drucker verwendet: Der 3D-Drucker besteht aus einer in x-, y- und z-Richtung verfahrbaren Basisplatte, wobei die 3-Achsen-Verfahreinheit aus drei mittels Schrittmotoren angetriebenen Kugelumlaufspindeln besteht. Als Dosiersystem wurde eine senkrecht über der Basisplatte montierte Jetting-Düse der Firma "Vermes Microdispensing GmbH, eingesetzt, um höherviskose bis standfest-pastöse Massen wie die erfindungsgemäß eingesetzten SM tröpfchenweise abscheiden zu können. Zur Steuerung des erfindungsgemäßen 3D-Druckers wurde eine modifizierte Druckersteuerung des o. g. "NEO"-Drucker eingesetzt. Die Vermes-Jetting-Düse wurde dabei so in die Drucker-Steuerung eingebunden, dass das Start-Stopp-Signal (Triggersignal) der Vermes-Jetting-Düse von der GCode-Steuerung des Druckers betätigt wurde. Dazu wurde in der GCode-Steuerung ein spezielles Signal hinterlegt. Die GCode-Steuerung des Computers schaltete damit lediglich die Jetting-Düse ein und aus (Start- und Stopp der Dosierung). Für die Signalübertragung des Start-Stopp-Signals wurde das Heizkabel der ursprünglich installierten Filament-Heizdüse des "NEO"-Druckers getrennt und mit der Vermes-Düse verbunden. Die übrigen Dosierparameter (Dosier-Frequenz, Rising, Falling usw.) der Vermes-Jetting-Düse wurden mittels der MDC 3200+ Microdispensing Control Unit eingestellt. Die Steuerung des 3D-Druckers erfolgte mittels eines Computers. Die Software-Steuerung und Steuersignal-Anbindung des 3D-Druckers (Software: "Repitier-Host") wurde dahingehend modifiziert, dass damit sowohl die Bewegung der Basisplatte in den drei Raumrichtungen gesteuert werden konnte als auch das Signal zur Tropfenabscheidung. Die Verfahrgeschwindigkeit des erfindungsgemäßen 3D-Druckers beträgt 0,3 m/s und wird konstant gehalten. D.h. die Basisplatte wird auch während der Tropfenabscheidung nicht angehalten. Der Abstand von abgeschiedenen Tropfen wird mittels der Einstellgröße "Delay" der Dosierdüse geregelt und beträgt bei allen Versuchen 98 ms.

**Dosiersystem des erfindungsgemäßen und nicht erfindungsgemäßen 3D-Druckers:** Als Dosiersystem für die verwendeten SM-Massen diente das Microdispensing-Dosiersystem "MDV 3200 A" der Firma "Vermes Microdispensing GmbH", bestehend aus einem Komplettsystem mit folgenden Komponenten: a) MDV 3200 A - Düseneinheit mit einem Anschluss für Luer-Lock Kartuschen, welche an der Kartuschen-Oberseite mit 3-8 bar Druckluft (Schlauch mit Adapter) beaufschlagt wurden, b) Vermes Begleit-Düsenheizungs-System MDH-230tfl links, c) Kartuschenheizung MCH30-230 mit MCH Druckluftentlastung zur Fixierung einer Hotmelt Kartusche, MHC 3002 Microdispensing Heizung Controller und Heizungskabel MCH-230tg, d) MDC 3200+ MicroDispensing Control Unit, die wiederum mit der PC-Steuerung verbunden war sowie über bewegliche Kabel mit der Düse, ermöglichte die Einstellung der Jetting Dosier-Parameter (Rising, Falling, Opentime, Needlelift, Delay, No Pulse, Heater, Düse, Abstand, Voxeldurchmesser, Luft-Vordruck an der Kartusche). In allen Beispielen war in dem Vermes-Ventil als Standard-Düseneinsatz eine 200 $\mu$m-Düse eingebaut (Düseneinsatz N11-200).

Als Vorratsbehälter (4a) für die SM-Masse (6b) dienten senkrecht stehende 30 ml Luer-Lock Kartuschen, die flüssigkeitsdicht an die Dispensing-Düse aufgeschraubt und mit Druckluft beaufschlagt wurden.

Die Steuerung der 3D-Drucker und des "Vermes"-Dosiersystems erfolgte mit einem PC und einer Open-Source-Software "Simplify 3D".

**Konditionierung der SM-Massen (6a):** Die verwendeten Materialien wurden sämtlich vor der Verarbeitung in einem 3D-Drucker entflüchtigt, indem im Fall von B1 100 g der Masse in einer offenen PE-Dose in einem Exsikkator 3h bei einem Vakuum von 10 mbar und Raumtemperatur (=25°C) gelagert wurden und anschließend die Masse in eine 30ml-Kartusche mit Bajonettverschluss luftfrei abgefüllt und mit einem passenden Auspress-Stempel (Kunststoffkolben) verschlossen wurde. Im Fall von B2 wurde die SM bei 70 °C in einem Stickstoff-gespülten Trockenschrank über Nacht aufgeschmolzen, in Kartuschen abgefüllte und heiß 5 min bei 2000 rpm luftfrei zentrifugiert. Die Luer-Lock Kartusche wurde dann in die vertikale Kartuschenhalterung des Vermes-Dosierventils flüssigkeitsdicht mit der Luer-Lock-Verschraubung nach unten eingeschraubt und Druck-Stempel an der Kartuschenoberseite mit 3-8 bar Druckluft beaufschlagt; der in der Kartusche befindliche Auspress-Stempel verhindert, dass die Druckluft in die zuvor evakuierte Masse gelangen kann.

**Beispiel 1 (B1):**

In einem Labormischer der Fa. PC Laborsystem GmbH mit Balkendissolver (Durchmesser Dissolverscheibe 60 mm) wurden 360 g eines Polyethylenglycols mit einer mittleren Molmasse Mn von 600 g/mol (PEG 600) vorgelegt und bei einer Temperatur von 45 °C 36 g einer hydrophoben pyrogenen Kieselsäure HDK® H18 (erhältlich bei Wacker Chemie AG; analytische Daten s. Tabelle 3) portionsweise unter Rühren über einen Zeitraum von ca. 1 h zugegeben. Anschließend wurde bei 45 °C 0,5 h bei 800 upm dispergiert und dann weitere 30 min unter Vakuum bei 45 °C und 800 upm gerührt. Es wurde ein klares Gel erhalten, dessen analytische Daten in Tabelle 1 zusammengefasst sind.

**Tabelle 1**

|  | Beispiel 1 (B1) |
|---|---|
| Anteil pRA (%) | 9 |
| Viskosität 1 s$^{-1}$ (Pa·s) | 419 |
| Viskosität 100 s$^{-1}$ (Pa·s) | 15 |
| R$^{90}$ (1000; 0,01) (s) | 10 |
| $\overline{(d\eta/dt)_1} / \overline{(d\eta/dt)_3}$ | 3,1 |
| G' (Pa) bei 25 °C | 33500 |
| tan $\delta$ (25 °C) | 0,0717 |
| $\tau_{krit}$ (Pa) bei 25 °C | 220 |
| tan $\delta$ (75 °C) | 0,079 |
| G' (Pa) bei 75 °C | 10764 |
| pRA = partikuläres rheologisches Additiv | |

**Beispiel 2 (B2):**

In einem Labormischer der Fa. PC Laborsystem GmbH mit Balkendissolver (Durchmesser Dissolverscheibe 60 mm) wurden eine Mischung von 356,2 g eines Polyethylenglycols mit einer mittleren Molmasse Mn von 600 g/mol (PEG 600, Festpunkt: 17 °C) und 118,8 g eines Polyethylenglycols mit einer mittleren Molmasse Mn von 20.000 g/mol (PEG 20000, Festpunkt: 57 °C) vorgelegt und bei einer Temperatur von 70 °C 25,0 g einer hydrophoben pyrogenen Kieselsäure HDK® H18 (erhältlich bei Wacker Chemie AG; analytische Daten s. Tabelle 3) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Tabelle 2**

|  | Beispiel 2 (B2) |
|---|---|
| Anteil pRA (%) | 5 |
| Viskosität 1 $s^{-1}$ (Pa·s) bei 70 °C | 110,3 |
| Viskosität 100 $s^{-1}$ (Pa·s) bei 70 °C | 5,8 |
| $T_s$ (°C) | 46,5 |
| dT | 0,36 |
| G' (Pa) bei 70 °C | 925 |
| tan $\delta$ bei 70 °C | 0,25 |
| $\tau_{krit}$ (Pa) bei 70 °C | 131,1 |
| pRA = partikuläres rheologisches Additiv | |

**Tabelle 3**

|  | HDK® H18 |
|---|---|
| Methanolzahl | 74 |
| % Kohlenstoff | 4,8 |
| DBP-Zahl (g / 100 g) | 165 |
| Rest-SiOH ($nm^{-1}$) | 0,36 |

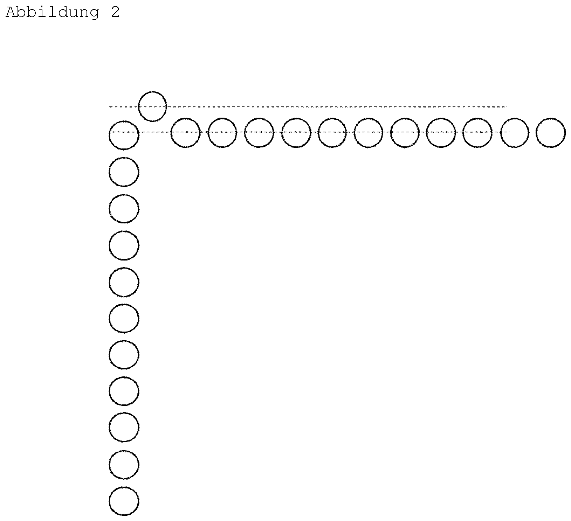

**Jetting-Beispiel J1 (nicht erfindungsgemäß):** B1 wurde mit den in Tabelle 4 angegebenen Jetting-Düsenparametern auf einem Glas-Objektträger der Fläche 25 x 75 mm tröpfchenweise als isolierte Einzelvoxel mit einem Voxelabstand von ca. 300 $\mu$m gemäß Abbildung 2 abgeschieden. Der räumliche Versatz zwischen dem Mittelpunkt des ersten Voxels der horizontalen Voxellinie von deren Mittelpunktslinie beträgt ca. 55 $\mu$m.

**Jetting-Beispiel J2 (erfindungsgemäß):** B1 wurde mit den in Tabelle 4 angegebenen Jetting-Düsenparametern auf einem Glas-Objektträger der Fläche 25 x 75 mm tröpfchenweise als isolierte Einzelvoxel mit einem Voxelabstand von ca. 300 $\mu$m gemäß Abbildung 2 abgeschieden. Es wurde kein räumlicher Versatz zwischen dem Mittelpunkt des ersten Voxels der horizontalen Voxellinie von deren Mittelpunktslinie beobachtet.

**Jetting-Beispiel J3 (nicht erfindungsgemäß):** B2 wurde mit den in Tabelle 4 angegebenen Jetting-Düsenparametern auf einem Glas-Objektträger der Fläche 25 x 75 mm tröpfchenweise als isolierte Einzelvoxel mit einem Voxelabstand von ca. 300 $\mu$m gemäß Abbildung 2 abgeschieden. Der räumliche Versatz zwischen dem Mittelpunkt des ersten Voxels der horizontalen Voxellinie von deren Mittelpunktslinie beträgt ca. 48 $\mu$m.

**Jetting-Beispiel J4 (erfindungsgemäß):** B2 wurde mit den in Tabelle 4 angegebenen Jetting-Düsenparametern auf einem Glas-Objektträger der Fläche 25 x 75 mm tröpfchenweise als isolierte Einzelvoxel mit einem Voxelabstand von ca. 300 $\mu$m gemäß Abbildung 2 abgeschieden. Es wurde kein räumlicher Versatz zwischen dem Mittelpunkt des ersten Voxels der horizontalen Voxellinie von deren Mittelpunktslinie beobachtet.

**Tabelle 4**

| | J1 | J2 | J3 | J4 |
|---|---|---|---|---|
| 3D-Drucker | nicht erfindungsgemäß | erfindungsgemäß | nicht erfindungsgemäß | erfindungsgemäß |
| Düsen-Durchmesser | 200 $\mu$m | 200 $\mu$m | 200 $\mu$m | 200 $\mu$m |
| Rising (ms) | 0,3 | 0,3 | 0,4 | 0,4 |
| Falling (ms) | 0,3 | 0,3 | 0,3 | 0,3 |
| Open Time (ms) | 1 | 1 | 0,5 | 0,5 |
| Needle Lift (%) | 100 | 100 | 100 | 100 |
| Delay (ms) | 98 | 98 | 98 | 98 |
| Heizung Kartusche (°C) | Off | Off | 70 | 70 |
| Heizung Düse (°C) | Off | Off | 70 | 70 |
| Kartuschen-Vordruck (bar) | 2 | 2 | 4 | 4 |
| Voxeldurchmesser ($\mu$m) | 570 | 600 | 450 | 420 |

**Patentansprüche**

1. Verfahren zum additiven Aufbau von Formkörpern (8) durch ortsspezifische Ausbringung eines strukturbildenden Materials sbM (6b), **dadurch gekennzeichnet, dass**
gleichzeitig oder zeitlich versetzt mindestens ein Stützmaterial SM (6a) in Bereiche ausgebracht wird, die frei von sbM (6b) bleiben, wobei das Ausbringen des SM (6a) über eine Vorrichtung erfolgt, die mindestens eine ortsfeste Ausbringeinheit (1a) für das SM (6a) aufweist, die durch ortsspezifisches Ausbringen des SM (6a) auf eine in x-, y- und z-Richtung positionierbare Basisplatte (3), die Stützstruktur für den Formkörper (8) sukzessive aufbaut, wobei das SM (6a) eine Zusammensetzung ist, enthaltend

(A) wenigstens einen Polyether,
(B) mindestens ein partikuläres rheologisches Additiv, und
(C) optional weitere Zusatzstoffe

und nach Abschluss des Aufbaus des Formkörpers (8), das SM (6a) aus dem Formkörper (8) entfernt wird.

2. Verfahren gemäß Anspruch 1 **dadurch gekennzeichnet, dass** das das Ausbringen des sbM (6b) über eine Vorrichtung erfolgt, die mindestens eine ortsfeste Ausbringeinheit (1b) für das sbM (6b) aufweist, die durch ortsspezifisches Ausbringen des sbM (6b) auf die in x-, y- und z-Richtung positionierbare Basisplatte (3), die Struktur des Formkörpers (8) sukzessive aufbaut.

3. Verfahren gemäß Anspruch 1 oder 2 **dadurch gekennzeichnet, dass** das SM (6a) eine strukturviskose, viskoelastische Zusammensetzung ist und folgendes aufweist:

- eine Scherviskosität von höchstens 100 Pa·s, gemessen bei einer Scherrate von 100 s$^{-1}$,
- einen Strukturrelaxationsparameter von mindestens 1 s, und
- einen Speichermodul G' von mindestens 5x10$^3$ Pa,

wobei die Scherviskosität, der Strukturrelaxationsparameter und der Speichermodul G' bei 25 °C auf einem Rheometer mit Platte-Platte-Geometrie, Durchmesser 25 mm, Spaltweite 300 $\mu$m, gemessen werden.

4. Verfahren gemäß Anspruch 3 **dadurch gekennzeichnet, dass** das SM (6a) einen Polyether enthält, der aus der Gruppe bestehend aus Polyethylenglycol, Polypropylenglycol, Polyethylenglycol-Polypropylenglycol-Copolymerisaten und deren Monoethern ausgewählt wird.

5. Verfahren gemäß Anspruch 1 oder 2 **dadurch gekennzeichnet, dass** das das SM (6a) bei 70 °C eine strukturviskose, viskoelastische Zusammensetzung ist und als Komponente (A) eine Polyetherzusammensetzung enthält, umfassend

(A1) mindestens einen ersten Polyether mit einem Festpunkt von unter 35 °C, und
(A2) mindestens einen zweiten Polyether mit einem Festpunkt von 35 °C oder darüber,
wobei der Festpunkt mittels DSC gemäß DIN EN ISO 11357-3 gemessen wird und der Anteil des zweiten Polyethers (A2) bezogen auf das Gesamtgewicht der Polyetherzusammensetzung 5 Gew.-% oder mehr bis 70 Gew.-% oder weniger beträgt und das SM (a)folgendes aufweist:

- eine Scherviskosität von höchstens 10 Pa·s, gemessen bei 70 °C und einer Scherrate von 100 s$^{-1}$ auf einem Rheometer mit Platte-Platte-Geometrie, Durchmesser 25 mm, Spaltweite 300 $\mu$m,
- einen Speichermodul G' von mindestens 100 Pa, gemessen bei 70 °C auf einem Rheometer mit Platte-Platte-Geometrie, Durchmesser 25 mm, Spaltweite 300 $\mu$m, und
- eine Verfestigungstemperatur von 20 °C oder mehr bis 60 °C oder weniger, wobei die Verfestigungstemperatur auf einem Rheometer mit Platte-Platte-Geometrie, Durchmesser 25 mm, Spaltweite 300 $\mu$m, mittels Temperatursweep unter dynamischer Scherbelastung ermittelt wird, wobei die Probe schrittweise mit einer Abkühlrate von 1,5 K/min von 70 °C auf 20 °C abgekühlt wird und die Probe mit einer konstanten Deformation von 0,1% bei einer konstanten Frequenz von 10 Hz belastet wird.

6. Verfahren gemäß Anspruch 5 **dadurch gekennzeichnet, dass** der erste Polyether (A1) und der zweite Polyether (A2) unabhängig voneinander aus der Gruppe bestehend aus Polyethylenglycol, Polypropylenglycol, Polyethylenglycol-Polypropylenglycol-Copolymerisaten und deren Monoethern ausgewählt werden.

7. Verfahren gemäß einem der Ansprüche 5 bis 6 **dadurch gekennzeichnet, dass** der erste Polyether (A1) aus der Gruppe bestehend aus

- einem Polyethylenglykol oder einem Monoether davon mit einer zahlenmittleren molaren Masse Mn von weniger als 1.000 g/mol,
- einem Polypropylenglykol oder einem Monoether davon mit einer zahlenmittleren molaren Masse Mn von weniger als 2.000 g/mol, und
- einem Polyethylenglycol-Polypropylenglycol-Copolymerisat oder einem Monoether davon mit einer zahlenmittleren molaren Masse Mn von weniger als 2.000 g/mol,

ausgewählt wird, wobei die zahlenmittleren molaren Masse Mn mittels Size Exclusion Chromatography gemessen wird.

8. Verfahren gemäß einem der Ansprüche 5 bis 7 **dadurch gekennzeichnet, dass** der zweite Polyether (A2) aus der Gruppe bestehend aus

- einem Polyethylenglycol oder einem Monoether davon mit einer zahlenmittleren molaren Masse Mn von 1.000 g/mol oder mehr, und
- einem Polyethylenglycol-Polypropylenglycol-Copolymerisat oder einem Monoether davon mit einer zahlenmittleren molaren Masse Mn von 2.000 g/mol oder mehr,

ausgewählt wird, wobei die zahlenmittleren molaren Masse Mn mittels Size Exclusion Chromatography gemessen wird.

9. Verfahren gemäß einem der Ansprüche 5 bis 8 **dadurch gekennzeichnet, dass** der Anteil des zweiten Polyethers (A2), bezogen auf das Gesamtgewicht der Polyetherzusammensetzung (A), 10 Gew.-% oder mehr bis 65 Gew.-% oder weniger beträgt.

10. Verfahren gemäß einem der Ansprüche 1 bis 9 **dadurch gekennzeichnet, dass** Komponente (B) zumindest eine hydrophobe Kieselsäure mit einer Silanolgruppendichte von kleiner 1,8 Silanolgruppen pro nm$^2$, bestimmt mittels Säure-Base-Titration, umfasst.

**11.** Verfahren gemäß einem der Ansprüche 1 bis 10 **dadurch gekennzeichnet, dass** Komponente (B) zumindest eine hydrophobe Kieselsäure mit einer Methanolzahl von mindestens 30 umfasst, wobei die Methanolzahl dem prozentualen Anteil von Methanol entspricht, welcher einer Wasserphase zugesetzt werden muss, um vollständige Benetzung der Kieselsäure zu erreichen, wobei vollständige Benetzung dabei ein vollständiges Einsinken der Kieselsäure in der Wasser-Methanol-Testflüssigkeit bedeutet.

**12.** Verfahren gemäß einem der Ansprüche 1 bis 11 **dadurch gekennzeichnet, dass** das SM (6a) vom Formkörper (8) mechanisch oder durch lösen in einem Lösungsmittel entfernt wird.

**13.** Verfahren gemäß einem der Ansprüche 1 bis 12 **dadurch gekennzeichnet, dass** das sbM (6b) aus der Gruppe bestehend aus Acrylaten, Acrylat-Silicon-Copolymeren, acrylfunktionellen Siliconen und Siliconkautschukmassen ausgewählt wird.

**14.** Verfahren gemäß einem der Ansprüche 1 bis 13 **dadurch gekennzeichnet, dass** das sbM (6b) eine Siliconkautschukmasse ist.

**Claims**

**1.** Process for additive construction of shaped bodies (8) by site-specific application of a structure-forming material SFM (6b), **characterized in that** simultaneously or with a temporal offset at least one support material SM (6a) is applied in regions which remain free from SFM (6b), wherein the application of the SM (6a) is carried out via an apparatus comprising at least one fixed application unit (1a) for the SM (6a) which by site-specific application of the SM (6a) on a base plate (3) positionable in the x, y and z direction successively constructs the support structure for the shaped body (8),
wherein the SM (6a) is a composition comprising

(A) at least one polyether,
(B) at least one particulate rheological additive and
(C) optionally further additives

and after completion of construction of the shaped body (8) the SM (6a) is removed from the shaped body (8).

**2.** Process according to Claim 1, **characterized in that** the application of the SFM (6b) is carried out via an apparatus comprising at least one fixed application unit (1b) for the SFM (6b) which by site-specific application of the SFM (6b) on the base plate (3) positionable in the x, y and z direction successively constructs the structure of the shaped body (8).

**3.** Process according to Claim 1 or 2, **characterized in that** the SM (6a) is a shear-thinning, viscoelastic composition and exhibits the following:

- a shear viscosity of not more than 100 Pa·s, measured at a shear rate of 100 s$^{-1}$,
- a structural relaxation parameter of at least 1 s and
- a storage modulus G' of at least $5 \times 10^3$ Pa,

wherein the shear viscosity, the structural relaxation parameter and the storage modulus G' are measured at 25°C on a rheometer having plate-plate geometry, a diameter of 25 mm and a gap width of 300 $\mu$m.

**4.** Process according to Claim 3, **characterized in that** the SM (6a) contains a polyether selected from the group consisting of polyethylene glycol, polypropylene glycol, polyethylene glycol-polypropylene glycol copolymers and monoethers thereof.

**5.** Process according to Claim 1 or 2, **characterized in that** at 70°C the SM (6a) is a shear-thinning viscoelastic composition and contains as component (A) a polyether composition comprising

(A1) at least one first polyether having a solidification point of less than 35°C and
(A2) at least one second polyether having a solidification point of not less than 35°C,
wherein the solidification point is measured by DSC according to DIN EN ISO 11357-3 and the proportion of the second polyether (A2) based on the total weight of the polyether composition is not less than 5% by weight to not more than 70% by weight and the SM (a) exhibits the following:

- a shear viscosity of at most 10 Pa·s, measured at 70°C and a shear rate of 100 s$^{-1}$ on a rheometer having plate-plate geometry, a diameter of 25 mm and a gap width of 300 $\mu$m,
- a storage modulus G' of at least 100 Pa measured at 70°C on a rheometer having plate-plate geometry, a diameter of 25 mm and a gap width of 300 $\mu$m and
- a solidification temperature of not less than 20°C to not more than 60°C, wherein the solidification temperature is determined on a rheometer having plate-plate geometry, a diameter of 25 mm and a gap width of 300 $\mu$m by means of a temperature sweep under dynamic shear stress, wherein the sample is subjected to stepwise cooling from 70°C to 20°C at a cooling rate of 1.5 K/min and the sample is subjected to a constant deformation of 0.1% at a constant frequency of 10 Hz.

6. Process according to Claim 5, **characterized in that** the first polyether (A1) and the second polyether (A2) are independently of one another selected from the group consisting of polyethylene glycol, polypropylene glycol, polyethylene glycol-polypropylene glycol copolymers and monoethers thereof.

7. Process according to either of Claims 5 to 6, **characterized in that** the first polyether (A1) is selected from the group consisting of

- a polyethylene glycol or a monoether thereof having a number-average molar mass Mn of less than 1000 g/mol,
- a polypropylene glycol or a monoether thereof having a number-average molar mass Mn of less than 2000 g/mol and
- a polyethylene glycol-polypropylene glycol copolymer or a monoether thereof having a number-average molar mass Mn of less than 2000 g/mol, wherein the number-average molar mass Mn is measured by size exclusion chromatography.

8. Process according to any of Claims 5 to 7, **characterized in that** the second polyether (A2) is selected from the group consisting of

- a polyethylene glycol or a monoether thereof having a number-average molar mass Mn of not less than 1000 g/mol and
- a polyethylene glycol-polypropylene glycol copolymer or a monoether thereof having a number-average molar mass Mn of not less than 2000 g/mol, wherein the number-average molar mass Mn is measured by size exclusion chromatography.

9. Process according to any of Claims 5 to 8, **characterized in that** the proportion of the second polyether (A2) based on the total weight of the polyether composition (A) is not less than 10% by weight to not more than 65% by weight.

10. Process according to any of Claims 1 to 9, **characterized in that** component (B) comprises at least one hydrophobic silica having a silanol group density of less than 1.8 silanol groups per nm$^2$ determined by acid-base titration.

11. Process according to any of Claims 1 to 10, **characterized in that** component (B) comprises at least one hydrophobic silica having a methanol number of at least 30, wherein the methanol number corresponds to the percentage proportion of methanol that must be added to a water phase to achieve complete wetting of the silica, wherein complete wetting means complete sinking of the silica in the water-methanol test liquid.

12. Process according to any of Claims 1 to 11, **characterized in that** the SM (6a) is removed from the shaped body (8) mechanically or by dissolution in a solvent.

13. Process according to any of Claims 1 to 12, **characterized in that** the SFM (6b) is selected from the group consisting of acrylates, acrylate-silicone copolymers, acryloyl-functional silicones and silicone rubber compositions.

14. Process according to any of Claims 1 to 13, **characterized in that** the SFM (6b) is a silicone rubber composition.

**Revendications**

1. Procédé de construction additive d'objets façonnés (8) par étalement local d'un matériau de formation de motif MFM (6b), **caractérisé en ce que** simultanément ou avec un décalage dans le temps, au moins un matériau d'appui MA (6a) est étalé dans les zones qui sont exemptes de MFM (6b), l'étalement du MA (6a) s'effectuant par un dispositif qui présente au moins une unité fixe d'étalement (1a) pour le MA (6a), qui par application locale du MA (6a) sur une plaque de base (3) positionnable dans les directions x, y et z construit successivement la structure d'appui pour l'objet façonné (8), le MA (6a) étant une composition contenant

   (A) au moins un polyéther,
   (B) au moins un additif rhéologique particulaire, et
   (C) éventuellement des additifs supplémentaires et, après la fin de la construction de l'objet façonné (8), le MA (6a) étant enlevé de l'objet façonné (8).

2. Procédé selon la revendication 1, **caractérisé en ce que** l'étalement du MFM (6b) s'effectue par un dispositif qui présente au moins une unité d'étalement fixe (1b) pour le MFM (6b), qui par étalement local du MFM (6b) sur la plaque de base (3) pouvant être positionnée dans les directions x, y et z construit successivement le motif de l'objet façonné (8).

3. Procédé selon la revendication 1 ou 2, **caractérisé en ce que** le MA (6a) est une composition viscoélastique à viscosité structurale, et présente ce qui suit :

   - une viscosité de cisaillement d'au plus 100 Pa·s, mesurée pour une vitesse de cisaillement de 100 s$^{-1}$,
   - un paramètre de relaxation structurale d'au moins 1 seconde, et
   - un module de conservation G' d'au moins 5 x 10$^3$ Pa, la viscosité de cisaillement, le paramètre de relaxation structurale et le module de conservation G' étant mesurés à 25 °C sur un rhéomètre à géométrie plaque-plaque, diamètre 25 mm, largeur de fente 300 μm.

4. Procédé selon la revendication 3, **caractérisé en ce que** le MA (6a) contient un polymère qui est choisi dans le groupe consistant en le polyéthylèneglycol, le polypropylèneglycol, les copolymères polyéthylèneglycol -polypropylèneglycol et leurs monoéthers.

5. Procédé selon la revendication 1 ou 2, **caractérisé en ce que** le MA (6a) est à 70 °C une composition viscoélastique à viscosité structurale, et contient en tant que composant (A) une composition de polyéthers comprenant

   (A1) au moins un premier polyéther ayant une température de fusion inférieure à 35 °C, et
   (A2) au moins un second polyéther ayant une température de fusion de 35 °C ou plus,
   dans lequel la température de fusion est mesurée par ACD selon DIN EN ISO 11357-3, et la proportion du second polyéther (A2), par rapport au poids total de la composition de polyéthers, étant de 5 % en poids ou plus jusqu'à 70 % en poids ou moins, et le MA (a) présentant ce qui suit :

   - une viscosité de cisaillement d'au plus 10 Pa·s, mesurée à 70 °C et pour une vitesse de cisaillement de 100 s$^{-1}$ sur un rhéomètre à géométrie plaque-plaque, diamètre 25 mm, largeur de fente 300 μm,
   - un module de conservation G' d'au moins 100 Pa, mesuré à 70 °C sur un rhéomètre à géométrie plaque-plaque, diamètre 25 mm, largeur de fente 300 μm, et
   - une température de solidification de 20 °C ou plus jusqu'à 60 °C ou moins, la température de solidification étant déterminée sur un rhéomètre à géométrie plaque-plaque, diamètre 25 mm, largeur de fente 300 μm, à l'aide d'un balayage de température sous une contrainte de cisaillement dynamique, l'échantillon étant refroidi pas à pas à une vitesse de refroidissement de 1,5 K/min de 70 °C à 20 °C, et l'échantillon étant soumis à une déformation constante de 0,1 % pour une fréquence constante de 10 Hz.

6. Procédé selon la revendication 5, **caractérisé en ce que** le premier polyéther (A1) et le second polyéther (A2) sont choisis indépendamment l'un de l'autre dans le groupe consistant en le polyéthylèneglycol, le polypropylèneglycol, les copolymères polyéthylèneglycol-polypropylèneglycol, et leurs monoéthers.

7. Procédé selon l'une des revendications 5 à 6, **caractérisé en ce que** le premier polyéther (A1) est choisi dans le groupe consistant en

- un polyéthylèneglycol ou un monoéther de celui-ci ayant une masse moléculaire moyenne en nombre Mn inférieure à 1 000 g/mol,
- un polyéthylèneglycol ou un monoéther de celui-ci ayant une masse moléculaire moyenne en nombre Mn inférieure à 2 000 g/mol, et
- un copolymère polyéthylèneglycol-polypropylèneglycol ou un monoéther de celui-ci ayant une masse moléculaire moyenne en nombre inférieure à 2 000 g/mol,

la masse moléculaire moyenne en nombre Mn étant mesurée par chromatographie par exclusion de taille.

**8.** Procédé selon l'une des revendications 5 à 7, **caractérisé en ce que** le second polyéther (A2) est choisi dans le groupe consistant en

- un polyéthylèneglycol ou un monoéther de celui-ci ayant une masse moléculaire moyenne en nombre Mn de 1 000 g/mol ou plus, et
- un copolymère polyéthylèneglycol-polypropylèneglycol ou un monoéther de celui-ci ayant une masse moléculaire moyenne en nombre Mn de 2 000 g/mol ou plus,

la masse moléculaire moyenne en nombre Mn étant mesurée par chromatographie par exclusion de taille.

**9.** Procédé selon l'une des revendications 5 à 8, **caractérisé en ce que** la proportion du second polyéther (A2), par rapport au poids total de la composition de polyéthers (A), est de 10 % en poids ou plus jusqu'à 65 % en poids ou moins.

**10.** Procédé selon l'une des revendications 1 à 9, **caractérisé en ce que** le composant (B) comprend au moins une silice hydrophobe ayant une densité des groupes silanol inférieure à 1,8 groupes silanol par nm$^2$, déterminée par titrage acide-base.

**11.** Procédé selon l'une des revendications 1 à 10, **caractérisé en ce que** le composant (B) comprend au moins une silice hydrophobe ayant un indice de méthanol d'au moins 30, l'indice de méthanol correspondant à la proportion de méthanol en pourcentage qu'il faut ajouter à une phase aqueuse pour atteindre un mouillage complet de la silice, le mouillage complet s'entendant alors comme étant un enfoncement complet de la silice dans le liquide d'essai eau-méthanol.

**12.** Procédé selon l'une des revendications 1 à 11, **caractérisé en ce que** le MA (6a) est enlevé de l'objet façonné (8), mécaniquement ou par dissolution dans un solvant.

**13.** Procédé selon l'une des revendications 1 à 12, **caractérisé en ce que** le MFM (6b) est choisi dans le groupe consistant en les acrylates, les copolymères acrylate-silicone, les silicones à fonctionnalité acryle et les masses de caoutchouc silicone.

**14.** Procédé selon l'une des revendications 1 à 13, **caractérisé en ce que** le MFM (6b) est une masse de caoutchouc silicone.

Abbildung 1

Abbildung 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150028523 A1
- US 20130337277 A1
- US 7368484 B2
- WO 2014092205 A1
- WO 2017020971 A1

- WO 2018036640 A
- EP 686676 B1
- EP 1433749 A1
- DE 102013226494 A1

**In der Beschreibung aufgeführte Nicht-Patentliteratur**

- **A. GEBHARDT.** Generative Fertigungsverfahren. Carl Hanser Verlag, 2013
- **T. MEZGER, G.** The Rheology Handbook. Vincentz Network GmbH & Co. KG, 2006, 147ff

- **G. W. SEARS et al.** *Analytical Chemistry,* 1956, vol. 28, 1981ff